# EUROPÄISCHE PATENTSCHRIFT

(11) **EP 0 682 676 B1**
(45) Veröffentlichungstag und Bekanntmachung des Hinweises auf die Patenterteilung: **16.04.1997**
(21) Anmeldenummer: 94904620.5
(22) Anmeldetag: 04.01.1994
(51) Int. Cl.: C08F 222/00, C11D 3/37

(54) **BIOLOGISCH ABBAUBARE COPOLYMERE UND VERFAHREN ZU IHRER HERSTELLUNG UND IHRE VERWENDUNG**
BIODEGRADABLE COPOLYMERS, METHOD OF PRODUCING THEM AND THEIR USE
COPOLYMERES BIODEGRADABLES, LEUR PROCEDE DE PREPARATION ET LEUR UTILISATION

(30) Priorität: 14.01.1993 DE 4300772
(43) Veröffentlichungstag der Anmeldung: 22.11.1995
(73) Patentinhaber: Stockhausen GmbH & Co. KG, 47805 Krefeld (DE)
(72) Erfinder: STOCKHAUSEN, Dolf, D-47800 Krefeld (DE); KRAUSE, Frank, D-47533 Kleve (DE); KLIMMEK, Helmut, D-47803 Krefeld (DE)
(74) Vertreter: Klöpsch, Gerald, Dr.-Ing. Patentanwalt
(86) Internationale Anmeldenummer: EP9400006
(87) Internationale Veröffentlichungsnummer: WO9415978

(56) Entgegenhaltungen:
- EP-A- 0 103 254
- EP-A- 0 377 448
- EP-A- 0 398 724
- EP-A- 0 497 611
- DE-A- 2 659 422
- US-A- 3 887 480

## Beschreibung

Gegenstand der Erfindung sind wasserlösliche, biologisch abbaubare Copolymere auf Basis ungesättigter Mono- und Dicarbonsäuren und Vinylester bzw. -ether sowie ein Verfahren zu ihrer Herstellung und ihre Verwendung in Wasch- und Reinigungsmitteln, bei der Inhibierung von Wasserhärte, als Dispergiermittel sowie bei der Herstellung, Veredelung und/oder Färbung von Textilfasern und Textilien.

Aufgrund einer in den letzten Jahren immer stärker in den Vordergrund tretenden ökologischen Betrachtungsweise war ein großer Teil der Bemühungen zur Entwicklung neuer Polymere auf deren biologische Abbaubarkeit gerichtet. In ganz besonderem Maße standen dabei die Produkte im Vordergrund, deren Anwendung und Entsorgung in wäßrigen Systemen erfolgte. In einigen Bereichen wie etwa der Papierindustrie erlebten daher abbaubare Polymere wie z.B. Stärken eine Renaissance als Bindemittel, in anderen Bereichen wurden Pfropfpolymere aus nachwachsenden Rohstoffen wie Stärke oder Zucker und synthetischen Monomeren entwikkelt. Für viele Anwendungen sind die technischen Anforderungen aber relativ hoch und können von den Produkten auf Basis nachwachsender Rohstoffe nicht in der Weise erfüllt werden, wie es mit den bisher verwendeten rein synthetischen Polymeren der Fall war. Beispielhaft sind die Polycarboxylate in Misch-Schlichten für Textilfasern zu nennen, bei denen als Kompromiß zwischen Abbaubarkeit und Schlichteeigenschaft oft eine Mischung aus Stärke und Polycarboxylat eingesetzt wird.

Ein anderes wichtiges Einsatzgebiet wasserlöslicher Polymere sind die Wasch- und Reinigungsmittel.
In den letzten Jahren war dort die Entwicklung durch den Ersatz der Polyphosphatbestandteile geprägt, die, wie bekannt, zu einer Überdüngung der Gewässer und den unter dem Stichwort Eutrophierung bekannten Problemen führen.

Polyphosphate besitzen neben der Primärwaschwirkung auch ein günstiges Sekundärwaschverhalten, indem sie die Erdalkalimetall-Ionen aus dem Waschwasser, den Textilien und dem Schmutz entfernen, die Ausfällungen unlöslicher Erdalkalimetallsalze auf den Textilien verhindern und den Schmutz in der Waschlauge dispergiert halten. Dadurch werden auch nach mehreren Waschgängen Inkrustationen und Vergrauungen unterdrückt. Als Ersatzstoffe für Polyphosphate sind derzeit im Markt stark Polycarboxylate wie Polyacrylsäuren und Acrylsäure/Maleinsäurecopolymere wegen ihrer guten Bindefähigkeit für Erdalkali-Ionen und wegen ihres hervorragenden Dispergier- und Schmutztragevermögens vertreten. Die letztgenannte Eigenschaft wird besonders gut durch die Verwendung von Acrylsäure/Maleinsäurecopolymeren erreicht. [Richter, Winkler in Tenside Surfactants Detergents 24 (1987) 4]. Dem Problem der Eutrophierung konnte durch den Einsatz der Polycarboxylate begegnet werden. Diese synthetischen Polymeren sind aber im wesentlichen als inert gegenüber Abbauvorgängen anzusehen. Wegen der bereits bestehenden und noch zu erwartenden mengenmäßigen Verbreitung dieser Polymere stellt sich daher die Frage nach deren Verbleib im Ökosystem. Untersuchungen hierzu haben gezeigt, daß ca. 90 % der Polycarboxylate am Klärschlamm adsorbiert und darüber entsorgt werden, d. h. durch Deponierung, landwirtschaftliche Nutzung oder Verbrennung. Ein biologischer Abbau findet nur in sehr begrenztem Maße statt, wobei die referierten Abbauraten zwischen 1 und 10 % liegen. Die Angaben hierzu sind den Veröffentlichungen von J. Lester et. al. "The partitioning of polycarboxylic acids in activated sludge", Chemosphere, Vol. 21, Nos. 4 - 5, pp 443 - 450 (1990). H. Schumann "Elimination von ¹⁴C-markierten Polyelektrolyten in biologischen Abwasserreinigunsprozessen, Wasser. Abwasser (1991) S. 376 - 383, P. Berth "Möglichkeiten und Grenzen des Ersatzes von Phosphaten in Waschmitteln", Angewandte Chemie (1975) S. 115 - 142 zu entnehmen.
Vom ökologischen Gesichtspunkt her ist die Einbringung großer Mengen nicht abbaubarer Verbindungen in die Umwelt daher bedenklich. Als Lösung dieses Problems bietet sich die Verwendung biologisch abbaubarer, d. h. zu Kohlendioxid und Wasser demineralisierbarer Polymere an.

Aus der US-Patentschrift 4 144 226 ist die Herstellung eines biologisch abbaubaren Polycarboxylat-Polymers auf Basis von Glyoxylsäureestern bekannt. Zur Erlangung technisch interessanter Molekulargewichte sind nach dem dort angegebenen Polymerisationsverfahren in wasserfreien organischen Lösemitteln Temperaturen von 0 °C oder tiefer erforderlich, wobei Polymerausbeuten von nur 75 % erreicht werden, denen sich weitere mindernde Isolierungs- und Reinigungsschritte anschließen. Wegen seiner Instabilität im sauren bzw. alkalischen pH-Bereich müssen die Endgruppen des Polymeren zusätzlich chemisch blockiert werden. Trotzdem kann beim Freisetzen der Carboxylgruppen aus der Form des Esters durch Verseifung eine Molekulargewichtserniedrigung durch Kettenspaltung und damit ein Verlust an Wirksamkeit auftreten. Aufgrund der Verwendung extrem teurer und großtechnisch nicht verfügbarer Monomere, sehr aufwendiger Polymerisations- und Aufarbeitungsprozesse sowie der geschilderten Instabilität eignen sich diese Polymeren nicht für den Einsatz großer Mengen bei den eingangs genannten Anwendungen.

In der Patentschrift GB 1 385 131 wird im Rahmen einer Waschmittelzusammensetzung der Einsatz eines biologisch abbaubaren Polymeren aus Maleinsäure- und Vinylalkohol-Einheiten beschrieben.

Das Herstellverfahren beinhaltet eine Fällungspolymerisation in Benzol, die Abtrennung und Trocknung des Polymeren sowie dessen Hydrolyse und Verseifung in wäßrig alkalischem Medium. Sieht man auch hier von der recht umständlichen und teuren Herstellung dieser Polymeren einmal ab, so zeigen sich noch weitere Nachteile bei der Abbaubarkeit und beim Eigenschaftsprofil. Nach den Angaben zur Abbaubarkeit geht ein drastischer Rückgang des Abbaus mit dem Molekulargewicht einher. Eine Steigerung des Molekulargewichts von 4.200 nach 18.000 bedeutet bereits einen Rückgang des Abbaus um 63 %. Bezüglich des Eigenschaftsprofils muß erwähnt werden, daß die Maleinsäure/Vinylalkohol Polymeren erst ab einem Gehalt von 35 % in Waschmittelformulierungen bessere Ergebnisse bei der Vergrauungsinhibierung zeigen als Natriumtripolyphosphat. Gegenüber dem Stand der Technik sind die unwirtschaftlich hohen Konzentrationen an Polymer im Waschmittel nachteilig, wobei derzeit gängige Waschmittel-Formulierungen etwa 5 % Polymer enthalten (DE 40 08 696).

Der Patentschrift GB 1 284 815 ist ebenfalls die Verwendung von Maleinsäure-VinylalkoholCopolymeren in Wasch- und Reinigungsmitteln als Phophat-Ersatzstoffe zu entnehmen. Auch hier werden Einsatzmengen von 10 - 80 Gew.% und vorzugsweise 15 - 60 Gew.%, bezogen auf das Wasch- bzw. Reinigungsmittel, empfohlen, was ebenfalls eine Anwendung unwirtschaftlich hoher Konzentrationen bedeutet und was darüber hinaus auf eine ungenügende Wirksamkeit bei kleineren Einsatzkonzentrationen hinweist.

Die EP 0 497 611 Al beschreibt die Herstellung und Verwendung von verbesserten und teilweise biologisch abbaubaren Polymeren auf Basis Maleinsäure, Acrylsäure und Vinylacetat, die in einem organischen Lösemittel polymerisiert und anschließend wäßrig hydrolysiert werden. Weiterhin wird die Möglichkeit einer Modifizierung der Polymeren durch nachträgliche Verseifung, gegebenenfalls gefolgt von einer Oxidationsreaktion beschrieben. Die Verfahrensvariante der Polymerisation in einem organischen Lösemittel wird als notwendig gegenüber der wäßrigen Fahrweise dargestellt, da auf diese Weise einerseits jedes gewünschte Monomerverhältnis im Polymer realisierbar wird und andererseits unerwünschte Hydrolysereaktionen der Monomeren nicht auftreten können. Die Abbaubarkeit der Terpolymeren nach der EP 0 497 611 A1 wurde in einem Closed Bottle-Test geprüft und innerhalb einer Skala von 0 - 100 % (BOD) (Biological Oxygen Demand) nach einer Testdauer von 25 Tagen bewertet. In dieser Testreihe sind eine reine Polyacrylsäure mit 1,8 % und ein Copolymer aus Maleinsäure und Vinylacetat mit 8 % Abbaubarkeit angegeben. Die im organischen Lösemittel hergestellten Produkte wurden in der hydrolysierten und verseiften Form und mit unterschiedlichen Molverhältnissen der eingesetzten Monomeren untersucht, wobei sich ein biologischer Abbau von 13,6 - 28,9 % einstellte.
Derartige Abbaugrade sind jedoch weiterhin völlig unzureichend. Damit bieten die nach dem Verfahren der EP 0 497 611 Al in organischen Lösemitteln erhaltenen Polymerisate keine Lösung im Sinne von verwendbaren Produkten mit guter bzw. leichter Abbaubarkeit. Der erforderliche Abbaugrad im Close Bottle-Test soll nach P. Schöberl "Methoden zur Bestimmung der biologischen Abbaubarkeit von Tensiden" in Seifen-Öle-Fette-Wachse 117 (1991) S. 740-744. ≥ 60 % betragen, um ein Produkt als abbaubar einzustufen. Als leicht abbaubar kann es bezeichnet werden, wenn innerhalb von 10 Tagen - nach Überschreiten eines Abbaugrads von 10 % - ein Abbaugrad von ≥ 60 % erreicht wird.

Der EP 0 398 724 A2 ist ein Verfahren zur Herstellung von Maleinsäure/Acrylsäure-Copolymeren in wäßriger Lösung zu entnehmen, bei der auch säurefreie Monomere verwendet werden können. Das Herstellungsverfahren beruht insbesondere auf der speziellen gleichzeitigen Dosierung aller Monomerkomponenten und sonstiger, für die Polymerisation erforderlicher Reagenzien. Obwohl die biologische Abbaubarkeit der Polymeren nicht besonders hervorgehoben wird, hat man solche Werte in 3 Versuchsbeispielen gemessen. Beispiel 1 erläutert die Herstellung eines Copolymeren aus Maleinsäure und Acrylsäure und gibt den biologischen Abbau nach 30 Tagen mit 3,3 % (BOD) an. Beispiel 5 beschreibt ein Copolymer aus Maleinsäure, Acrylsäure und 10,6 Gew% Vinylacetat mit einem biologischen Abbau von 9,6 % (BOD) nach 30 Tagen. Beispiel 6 beschreibt ein Copolymer aus Maleinsäure, Acrylsäure und 10,6 Gew% 2-Hydroxyäthylmethacrylat mit einem Abbaugrad von 7 % nach 30 Tagen. Die Abbauraten sind demnach ebenfalls unzureichend. Alle erwähnten Beispiele beschreiben die Polymerisation in wäßriger Lösung mit der Dosierung der genannnten Monomeren, Katalysatoren (Wasserstoffperoxid und Persulfat) und Natronlauge zur teilweisen Neutralisation der sauren Monomeren während der Polymerisation. Nach Abschluß der Polymerisationsreaktion wird mit 50%iger Natronlauge bei 70 °C neutral gestellt.

Aus dem zuvor gesagten geht klar hervor, daß auch diese, nach dem Verfahren der Polymerisation in Wasser hergestellten Polymere keine Lösung für abbaubare Cobuilder darstellen.

Es bestand daher die Aufgabe Copolymere auf Basis Maleinsäure/Acrylsäure zur Verfügung zu stellen, die nach einem technisch einfachen Verfahren mit technisch leicht zugänglichen Monomeren in wäßrigem Medium hergestellt werden können, die ein für den Einsatz in Waschund Reinigungsmitteln erforderliches gutes Bindevermögen für Erdalkali-Ionen und ein gutes Dispergiervermögen zeigen und die gegenüber den Polymeren des Standes der Technik leicht bis gut abbaubar sind.

Die Aufgabe wurde überraschenderweise durch die Bereit stellung und Verwendung von Biologisch abbaubare, für wasch- und Reinigungsmittel geeignete Polymere aus
a) polymerisierten, monoethylenisch ungesättigten Dicarbonsäuren und/oder deren Salzen,
b) polymerisierten, monoethylenisch ungesättigten Monocarbonsäuren und/oder deren Salzen,
c) polymerisierten, monoethylenisch ungesättigten Monomeren, die nach Hydrolyse oder Verseifung eine oder mehrere an der C-C-Kette kovalent gebundene Hydroxylgruppen aufweisen und gegebenenfalls
d) weiteren polymerisierten, radikalisch copolymerisierbaren Monomeren,
erhältlich durch wenigstens teilweise Neutralisation der sauren Monomeren a), b) und gegebenenfalls d), radikalische Polymerisation der Monomeren a) bis d) sowie Hydrolyse bzw. Verseifung der polymerisierten Monomereinheiten c) zu an der C-C-Kette des Polymeren kovalent gebundene Hydroxylgruppen in wäßrigem Medium, wobei die Polymeren eine biologische Abbaurate von ≥ 60 % (BOD) nach 28 Tagen aufweisen.

Die Copolymeren sind insbesondere durch radikalische Polymerisation von Monomermischungen aus
a) 10 - 70 Gew% monoethylenisch ungesättigen C₄₋₈-Dicarbonsäuren bzw. deren Salzen
b) 20 - 85 Gew% monoethylenisch ungesättigen C₃₋₁₀-Monocarbonsäuren bzw. deren Salze
c) 1 - 50 Gew% einfach ungesättigten Monomeren, die nach Verseifung Hydroxylgruppen an der Polymerkette freisetzen
d) 0 - 10 Gew% weiterer, radikalisch copolymerisierbarer Monomere, wobei die Summe der Monomeren nach a) bis d) 100 Gew.% beträgt,
in wäßriger Lösung und nachfolgender Verseifung der Monomerbestandteile nach c) erhältlich.

Als Monomere der Gruppe a) kommen monoethylenisch ungesättigte C₄-C₈-Dicarbonsäuren, deren Anhydride bzw. deren Alkali- und/oder Ammoniumsalze und/oder Aminsalze in Frage. Geeignete Dicarbonsäuren sind beispielsweise Maleinsäure, Fumarsäure, Itaconsäure, Methylenmalonsäure. Bevorzugt verwendet man Maleinsäure, Maleinsäureanhydrid, Itaconsäure, Itaconsäureanhydrid sowie die entsprechenden Natrium-, Kalium- oder Ammoniumsalze von Malein- bzw. Itaconsäure. Die Monomeren der Gruppe a) sind zu 10 - 70 Gew%, vorzugsweise zu 20 - 60 Gew% und besonders bevorzugt zu 25 - 55 Gew% in der Monomermischung vorhanden.

Als Monomere der Gruppe b) kommen monoethylenisch ungesättigte C₃- bis C₁₀-Carbonsäuren sowie deren Alkali- und/oder Ammoniumsalze und/oder Aminsalze in Betracht. Zu diesen Monomeren gehören beispielsweise Acrylsäure, Methacrylsäure, Dimethylacrylsäure, Ethylacrylsäure, Vinylessigsäure, Allylessigsäure. Vorzugsweise verwendet man aus dieser Gruppe von Monomeren Acrylsäure, Methacrylsäure, deren Gemische sowie die Natrium-, Kalium- oder Ammoniumsalze oder deren Mischungen. Die Monomeren der Gruppe b) sind zu 20 - 85 Gew%, vorzugsweise zu 25 - 60 Gew% und besonders bevorzugt zu 30 - 60 Gew% in der Monomermischung vorhanden.

Zu den Monomeren der Gruppe c) sind jene zu rechnen, die nach der Copolymerisation bei einer Spaltungsreaktion beispielsweise durch Hydrolyse oder Verseifung des Polymerisates eine oder mehrere Hydroxylgruppen, die direkt an der C-C-Polymerkette kovalent gebunden sind, freisetzen. Beispielhaft seien genannt: Vinylacetat, Vinylpropionat, Essigsäure-Methylvinylester, Methylvinylether, Etylenglykolmonovinylether, Vinylidencarbonat. Die Monomeren der Gruppe c) sind zu 1 - 50 Gew%, vorzugsweise 4 - 40 Gew% und besonders bevorzugt 8 - 30 Gew% in der Monomermischung vorhanden.

Als Monomere der Gruppe d), die zur Modifizierung der Copolymerisate eingesetzt werden können, eignen sich z. B. Sulfongruppen und Sulfatgruppen enthaltende Monomere wie beispielsweise Meth(allylsulfonsäure), Vinylsulfonsäure, Styrolsulfonsäure, Acrylamidomethylpropansulfonsäure sowie Phosphorsäuregruppen enthaltende Monomere wie beispielsweise Vinylphosphonsäure, Allylphosphorsäure und Acrylamidomethylpropanphosphonsäure und deren Salze sowie Hydroxyethyl(meth)acrylatsulfate, Allylalkoholsulfate und -phosphate. Als Monomere der Gruppe d) eignen sich außerdem wegen der erforderlichen Löslichkeit in begrenzter Menge zu verwendende doppelt ethylenisch ungesättigte nicht konjugierte Verbindungen sowie Polyalkylenglykolester von (Meth)Acrylsäure und Polyalkylenglykolether mit (Meth)allylalkohol, die gegebenenfalls endverschlossen sein können. Die Monomeren der Gruppe d) sind gegebenenfalls bis zu 10 Gew% in der Monomermischung vorhanden.

Die Herstellung der Copolymerisate erfolgt in wäßriger Lösung bei 40 - 180 °C in Anwesenheit von Polymerisationsinitiatoren die unter den Polymerisationsbedingungen Radikale bilden, z. B. anorganische und organische Peroxide, Persulfate, Azoverbindungen und sogenannte Redoxkatalysatoren. Die reduzierende Komponente von Redoxkatalysatoren kann beispielsweise von Verbindungen wie Natriumsulfit, Natriumbisulfit, Natriumformaldehydsulfoxylat und Hydrazin gebildet werden. Da die alleinige Verwendung von Persulfat in der Regel zu breiten Molokulargewichtsverteilungen und niedrigen Restmonomeren und die alleinige Verwendung von Peroxiden zu engeren Molekulargewichtsverteilungen und höherem Restmonomerengehalt führt, ist es von Vorteil, eine Kombination aus Peroxid und/oder Persulfat, Reduktionsmittel und Schwermetall als Redoxkatalysator einzusetzen. Die Copolymerisation kann auch durch Einwirkung von ultravioletter Strahlung in Anwesenheit von Foto-Initiatoren durchgeführt werden. Falls eine Regelung des Molekulargewichts erforderlich ist, werden Polymerisationsregler eingesetzt. Geeignete Regler sind beispielsweise Mercaptoverbindungen, Alkylverbindungen, Aldehyde, Schwermetallsalze. Eine Regelung des Molekulargewichts kann auch über die Wahl des Materials des Polymerisationsreaktors erfolgen, so führt z.B. die Verwendung von Stahl als Reaktormaterial zu niedrigeren Molekulargewichten als die Verwendung von Glas oder Emaille.

Die Polymerisation erfolgt in üblichen Polymerisationsgefäßen bei Polymerisationstemperaturen von 40 - 180 °C, wobei gegebenenfalls beim Überschreiten von Siedetemperaturen der Reaktionsteilnehmer unter Druck gearbeitet wird. Ein bevorzugter Temperaturbereich für die Polymerisation liegt bei 60 - 120 °C. Es wird in einer gegegebenenfalls durch Einblasen von Stickstoff erzeugten Inertgasatmosphäre unter Ausschluß von Luftsauerstoff gearbeitet. Die Monomer-Komponenten werden entweder in wäßriger Lösung insgesamt vorgelegt und durch Zugabe des Initiatorsystems auspolymerisiert oder aber in einer bevorzugtem Ausführungsform über einen Zeitraum von 1 - 10 Stunden, vorzugsweise 2 - 8 Stunden in den Polymerisationsreaktor dosiert.

Eine Ausführungsform besteht in der Vorlage des Monomers a) und der Dosierung der Monomeren b) bis d), die sowohl in Mischung als auch getrennt zugegeben werden können. Eine bevorzugte Ausführungsform besteht in einer gemeinsamen Vorlage von Maleinsäure und einem Teil bzw. der ganzen Menge des Monomeren der Gruppe c) und der Dosierung der verbliebenen Monomeren. Diese Methode der Monomerzugabe hat den Vorteil, daß der im geschlossenen Polymerisationsbehälter während der Polymerisationsreaktion auftretende Druck, bedingt durch die sonst verstärkt zu beobachtende Decarboxylierung von Maleinsäureeinheiten in der Polymerkette wesentlich vermindert wird, d. h. daß die nach diesem Verfahren hergestellten Polymere mehr Carboxylgruppen enthalten als die, bei denen das Monomer der Gruppe c) nicht vorgelegt wurde.

Das Initiatorsystem wird parallel zu den Monomeren dosiert und dessen Zugabe nach Beendigung der Monomerdosierung noch vorzugsweise eine Zeit lang fortgeführt, um den Monomerumsatz zu vervollständigen. Um Copolymerisate mit niedrigem Restgehalt an Maleinsäure zu erhalten und um eine vorzeitige Verseifung von Monomeren der Gruppe c) zu unterdrücken, werden die eingesetzten sauren Monomeren neutralisiert oder zumindest teilweise neutralisiert.

Dies kann durch Neutralisation oder Teilneutralisation der vorgelegten Monomeren nach a) geschehen und auch durch völlige oder teilweise Neutralisation der zu dosierenden Monomeren nach b) bzw. d). Hierbei sollte jedoch eine Neutralisation oder Teilneutralisation der carbonsäurehaltigen Monomeren während der Polymerisation durch Dosierung von Laugen in den Reaktor bei gleichzeitiger Dosierung von Vinylestern vermieden werden, da dies zu vorzeitiger Verseifung des Monomeren unter Bildung von Acetaldehyd und braungefärbten Reaktionsprodukten führt.

Nach Abschluß der Polymerisation werden, falls erforderlich, niedrig siedende Bestandteile wie z. B. Restmonomere bzw. deren Hydrolyseprodukte gegebenenfalls bei Unterdruck abdestilliert .Die Verseifung der Monomeren gemäß c) findet im sauren oder basischen Milleu statt, wobei pH-Werte von kleiner 6,5 und größer 10 bevorzugt werden. Je nach Monomertyp verläuft die Verseifung bei 60 - 130 °C in 0,5 bis 5 Stunden. Die für die Verseifung erforderlichen pH-Werte in der zu verseifenden Polymerlösung können durch Zugabe fester, flüssiger, gelöster oder gasförmiger, anorganischer und organischer Säuren und Basen eingestellt werden. Beispielhaft seien Schwefelsäure, Salzsäure, Schwefeldioxid, p-Toluolsulfonsäure, Natronlauge und Kalilauge genannt. Die bei der Verseifung gebildeten, leicht flüchtigen Reaktionsprodukte können durch Destillation, gegebenenfalls bei Unterdruck abgetrennt werden. Eine bevorzugte Ausführungsform ist die alkalische Verseifung ohne vorherige Destillation von Restmonomeren und der Hydrolyseprodukte in Gegenwart von Peroxiden, wobei die noch vorhandenen Restmonomeren und der Hydrolyseprodukte in situ polymerisiert bzw. zu ungefährlichen Carbonsäuren oxidiert werden. Der Verseifungsgrad der verseifbaren Monomereneinheiten beträgt 1 - 100 %, vorzugsweise 30 - 100 %, und besonders bevorzugt 60 - 100 %. Nach Abschluß der Verseifung wird das wäßrige Polymerisat auf den für die Anwendung erforderlichen pH-Wert eingestellt. Hierzu werden die bekannten Mittel wie Laugen und Basen, Mineralsäuren, Carbonsäuren und Polycarbonsäuren eingesetzt.

Prinzipiell kann die Polymerisation auch in der Art einer Suspensionspolymerisation durchgeführt werden, wobei die wäßrige Monomerphase unter Zuhilfenahme von Suspensionsstabilisatoren in einer organischen Phase, die z. B. aus Cyclohexan bestehen kann, dispergiert wird und in Form dieser Suspension auspolymerisiert und verseift wird. Danach kann das Wasser azeotrop aus der Suspension abdestilliert und die festen Polymerisatteilchen können problemlos von der organischen Phase abfiltriert und nach Trocknung ihrer Verwendung zugeführt werden.Eine weitere Möglichkeit zur Herstellung pulverförmiger Polymerisate besteht in der Sprühtrocknung der erfindungsgemäßen Polymerisatlösung. Beispielsweise können Waschpulver direkt aus einer gemeinsamen Lösung bzw. Suspension der erfindungsgemäßen Polymerisatlösungen und weiteren Waschmittelbestandteilen durch Sprühtrocknung erhalten werden.

Die oben beschriebenen Polymerisate fallen im Molekulargewichtsbereich von 500 bis 5.000.000 an, wobei die niedrigmolekularen Produkte mit Molekulargewichten unter 70.000 für die Anwendung als Cobuilder bereits voll geeignet sind. Anhand anwendungstechnischer Untersuchungen hat sich gezeigt, daß die erfindungsgemäßen Polymerisate im Molekulargewichtsbereich 20.000 und niedriger eine ausgezeichnete Wirkung in Waschmitteln entfalten und ein gutes Dispergier- und Suspendiervermögen aufweisen. Darüber hinaus werden sie im Klärschlamm-Eliminationstest fast vollständig entfernt.

Die höher molekularen Polymerisate sind für andere Verwendungszwecke geeignet, beispielsweise als Verdickungsmittel, als Hilfsmittel bei der Papierherstellung, als Hilfsmittel in der Wasser - und Abwasseraufbereitung oder als Bohrspülungsadditive.
Bei der Herstellung der Polymerisate hat sich überraschenderweise und im Gegensatz zu den Feststellungen in EP 497 611 A1 auf Seite 4 gezeigt, daß es vorteilhaft ist, eine weitgehende Hydrolyse des Maleinsäureanhydrids bzw. die Neutralisation der Maleinsäure vor der Polymerisation vorzunehmen. Die auf diese Weise erhaltenen Polymerisate zeigen überraschend vorteilhafte anwendungstechnische Eigenschaften in Wasch- und Reinigungsmitteln und sind biologisch abbaubar.

Die erfindungsgemäßen Polymerisate, hergestellt durch Lösungspolymerisation und Verseifung im wäßrigen System, zeigen eine gute bis leichte Abbaubarkeit und unterscheiden sich dadurch erheblich von den nach dem Verfahren der EP 0 497 611 A1 in organischen Lösemitteln hergestellten Polymeren mit nachgeschalteter Verseifung, deren Abbaubarkeiten bei weitem nicht ausreichend sind. Obwohl die Ursachen dafür nicht geklärt sind, könnte z. B. eine unterschiedliche Anordnung der Monomeren in der Polymerkette, bedingt durch die verschiedenen Polymerisationsverfahren, einen entscheidenden Einfluß auf das Abbauverhalten hervorrufen.

In den folgenden Beispielen werde n die Herstellung und Eigenschaften der erfindungsgemäßen Polymerisate erläutert. Anwendungsorientierte Untersuchungen zeigen die Wirksamkeit der Polymerisate bei der Inhibierung von Wasserhärte (Ca- und Mg-Carbonat), als Pigmentdispergatoren, der Ca²⁺- bzw. CaCO₃-Dispergierfahigkeit und im Waschversuch sowie die biologische Abbaubarkeit der erfindungsgemäßen Polymerisate. Die erfindungsgemäßen Produkte zeigen darüber hinaus eine gute bzw. ausgezeichnete Wirksamkeit als Hilfsmittel bei der Lederherstellung wenn sie u.a. in den Prozessen der Weiche, beim Äschern, in den Waschprozessen nach dem Äschern sowie bei der Entkälkung, insbesondere bei der CO₂-Entkälkung eingesetzt werden. Sie können weiterhin vorteilhaft bei der Ledergerbung, d.h. bei der Vorgerbung, Gerbung und beim Nachgerben eingesetzt werden. Darüber hinaus wird in den Beispielen die hervorragende biologische Abbaubarkeit der erfindungsgemäßen Polymerisate demonstriert.

Weiterhin sind die erfindungsgemäßen Produkte sehr geeignet zur Verwendung in Textilveredlungsprozessen, beispielsweise bei der Vorbehandlung von Baumwolle, als Zusatz bei der Rohwarenwäsche, beim Abkochen, beim Beuchen, als Stabilisator bei der Peroxidbleiche, bei Färbereiprozessen von Cellulose- und Synthesefasern, z.B. zum Dispergieren von Oligomeren, beim Textildruck sowie in Nachreinigungsprozessen.

### Herstellungsbeispiele

### Beispiel 1

In einem 2 l Polymerisationsgefäß aus Glas, das mit Heizbad, Rührer, Rückflußkühler und Dosiereinrichtungen für flüssige und gasförmige Stoffe versehen ist, werden 63,8 g Maleinsäureanhydrid in 260 g demineralisiertem Wasser und 93,6 g 50%iger Natronlauge bei 85 °C gelöst und 3,5 mg Eisen(II)ammoniumsulfat zugefügt. Dann werden über einen Zeitraum von 4 bzw. 4,5 Stunden zwei Lösungen in das Polymerisationsgefäß dosiert. Lösung I (4 Stunden) besteht aus 81,4 g Acrylsäure, 42,1 g Vinylacetat und 100 g demineralisiertem Wasser und Lösung II (4,5 Stunden) aus 18,7 g 35%igem Wasserstoffperoxid und 54 g Wasser. Nach dem Ende der Dosierung von Lösung II ist die Innentemperatur auf 92 °C angestiegen, es wird noch 1 Stunde bei dieser Temperatur nachgerührt und mit einem Wasserabscheider werden 11 g wäßrige Phase und 5g Vinylacetat abgezogen. Die Polymerisatlösung wird auf 40 °C abgekühlt und mit Natronlauge auf pH 10 eingestellt und 60 Minuten am Rückfluß verseift, danach abgekühlt und mit Salzsäure auf pH 7,0 eingestellt. Die Trockensubstanz beträgt 30 %, das Polymerisat hat ein Molekulargewicht von Mw = 22.175. Im IR-Spektrum sind keine Esterbanden mehr nachweisbar.

### Beispiel 2

In einem Polymerisationsansatz entsprechend der Versuchsdurchführung des Beispiels 1 werden die folgenden Substanzmengen vorgelegt bzw. dosiert:
Vorlage: 69,15 g Maleinsäureanhydrid, 101,61 g 50%ige Natronlauge, 270 g demineralisiertes Wasser, 3,5 mg Eisen(II)ammoniumsulfat
Lösung I: 70,16 g Acrylsäure, 60,2 g Vinylacetat, 50 g Wasser
Lösung II: 18,7 g 35%iges Wasserstoffperoxid, 100 g demineralisiertes Wasser

Nach dem Ende der Dosierung von Lösung II liegt die Produkttemperatur bei 86 °C. Es wird 1 Stunde bei dieser Temperatur nachgerührt und mit einem Wasserabscheider werden 10 g wäßrige Phase und 3 g Vinylacetat abdestilliert. Die weitere Aufarbeitung des Polymerisates erfolgt wie in Beispiel 1 beschrieben. Das Endprodukt hat eine Trockensubstanz von 31,6 %, das Molekulargewicht liegt bei Mw = 14.077, im IR-Spektrum sind keine Estergruppierungen mehr nachweisbar.

### Beispiel 3

In einem Polymerisationsansatz entsprechend der Versuchsdurchführung des Beispiels 1 werden die folgenden Substanzmengen vorgelegt bzw. dosiert:
Vorlage: 114,8 g Maleinsäureanhydrid, 313,2 g demineralisiertes Wasser, 168,5 g 50%ige Natronlauge, 6,3 mg Eisen(II)ammoniumsulfat
Lösung I: 146,5 g Acrylsäure, 45 g demineralisiertes Wasser, 65,1 g 50%ige Natronlauge, 35,4 g Vinylacetat
Lösung II: 33,7 g 35%ige Wasserstoffperoxid, 2 g Natriumperoxodisulfat, 300 g demineralisiertes Wasser

Nach dem Ende der Dosierung von Lösung II liegt die Produkttemperatur bei 92 °C. Es wird 1 Stunde bei dieser Temperatur nachgerührt und mit einem Wasserabscheider werden 21,5 g wäßrige Phase abdestilliert. Die weitere Aufarbeitung des Polymerisates erfolgt wie im Beispiel 1 beschrieben. Das Endprodukt hat einen Trockensubstanzgehalt von 33,1 % und ein Molekulargewicht von Mw = 18.343.

### Beispiel 4

Hier wird der Polymerisationsansatz von Beispiel 1 mit folgenden Änderungen wiederholt:
Lösung II: 119 g demineralisiertes Wasser, 13,17 g Natriumperoxodisulfat
Lösung III: 123 g demineralisiertes Wasser, 2,5 g Natriumdisulfit

Während der Dosierung der Lösungen I - III beträgt die Produkttemperatur 65 °C, danach wird 1 Stunde bei 90 °C nachgerührt. Bei der Destillation scheidet sich nur eine wäßrige Phase ab, Vinylacetat ist nicht vorhanden. Die weitere Aufarbeitung des Produktes erfolgt gemäß Beispiel 1.
Das Endprodukt hat einen Trockensubstanzgehalt von 31 % und eine Viskosität von 180 mPa.s.

### Beispiel 5

In einem Polymerisationsansatz entsprechend der Versuchsdurchführung des Beispiels 1 werden die folgenden Substanzen vorgelegt bzw. dosiert:
Vorlage: 63,8 g Maleinsäureanhydrid, 174 g demineralisiertes Wasser, 93,6 g 50%ige Natronlauge, 3,5 mg Eisen(II)ammoniumsulfat
Lösung I: 81,4 g Acrylsäure, 42,1 g Vinylacetat, 100 g demineralisiertes Wasser
Lösung II: 18,7 g 35%iges Wasserstoffperoxid, 144 g demineralisiertes Wasser

Nach dem Ende der Dosierung von Lösung II beträgt die Reaktorinnentemperatur 90 °C. Bei dieser Temperatur wird 1 Stunde nachgerührt und mit einem Wasserabscheider werden 14 g Wasser und 5 g Vinylacetat abdestilliert. Die weitere Aufarbeitung des Polymerisats erfolgt wie im Beispiel 1 beschrieben. Das Endprodukt hat einen Trockensubstanzgehalt von 31 % und ein Molekulargewicht von Mw = 30.200.

### Beispiel 6

In einem gerührten Edelstahldruckreaktor werden 144,8 g Maleinsäureanhydrid in 308,0 g demineralisiertem Wasser und 212,6 g 50%iger Natronlauge bei 85 °C gelöst und mit 6,3 mg Eisen(II)ammoniumsulfat versetzt. Der Reaktor wird mit Stickstoff gespült, verschlossen und auf 90 °C erhitzt. Dann werden zwei Lösungen (I und II) über 4 bzw. 4,5 Stunden in den Reaktor dosiert und nach Ende der Dosierung noch 1 Stunde bei 90 °C nachgerührt. Lösung I enthält 124 g Acrylsäure, 37 g demineralisiertes Wasser, 55,1 g 50%ige Natronlauge und 75 g Vinylacetat. Lösung II enthält 33,7 g 35%iges Wasserstoffperoxid, 2 g Natriumperoxodisulfat und 205,8 g demineralisiertes Wasser. Am Ende der Dosierung von Lösung II beträgt der Reaktorinnendruck 3,8 bar. Nach dem Abkühlen werden aus dem Reaktionsansatz 32,5 g Wasser über einen Wasserabscheider abdestilliert, Vinylacetat ist nicht mehr vorhanden. Zur Verseifung wird das Produkt mit Natronlauge aufpH 10,5 eingestellt und 1 Stunde am Rückfluß gekocht und anschließend mit Salzsäure neutralisiert.
Der Trockensubstanzgehalt des Polymerisates beträgt 35,9 %.

### Beispiel 7

Hier wird das Beispiel 6 mit folgenden Änderungen wiederholt:

In der Vorlage wird das Eisensalz weggelassen und es erfolgt keine Stickstoffspülung des Reaktors. Die Lösung II wird wie folgt verändert = 25 g Natriumpersulfat in 205,8 g demineralisiertem Wasser. Am Ende der Dosierung von Lösung II hat sich ein Druck von 3,5 bar im Reaktor aufgebaut. Die weitere Aufarbeitung des Produktes verläuft analog zu dem Beispiel 6. In der Destillationsstufe fallen 5 g Vinylacetat an.
Das Polymerisat hat eine Trockensubstanz vom 37,6 %.

### Beispiel 8

Hier wird entsprechend Beispiel 6 in einem Druckreaktor bei 90 °C polymerisiert, eine Stickstoffspülung unterbleibt und die eingesetzten Mengen sind wie folgt:
Vorlage: 176,4 g Maleinsäureanhydrid, 372,1 g demineralisiertes Wasser, 259,2 g 50%ige Natronlauge
Lösung I: 100,8 g Acrylsäure, 48,6 g Vinylacetat, 45 g 50%ige Natronlauge, 30 g demineralisiertes Wasser
Lösung II: 33,7 g 35%iges Wasserstoffperoxid, 171,0 g demineralisiertes Wasser

Nach dem Ende der Dosierung von Lösung II hat sich ein Druck von 3,2 bar aufgebaut. Die weitere Aufarbeitung des Produktes verläuft analog zu dem Beispiel 6.
Das Polymerisat hat eine Trockensubstanz von 34,5 % und ein Molekulargewicht von Mw = 11.100.

### Beispiel 9

Hier wird entsprechend Beispiel 6 in einem Druckreaktor bei 90 °C polymerisiert, eine Stickstoffspülung unterbleibt und die eingesetzten Mengen sind wie folgt:
Vorlage: 113,4 g Maleinsäureanhydrid, 248,8 g demineralisiertes Wasser, 166,7 g 50%ige Natronlauge, 6,3 mg Eisen(II)ammoniumsulfat
Lösung I: 34,9 g Vinylacetat, 45,0 g demineralisiertes Wasser, 145,8 g Acrylsäure
Lösung II: 33,6 g 35%iges Wasserstoffperoxid, 232 g demineralisiertes Wasser

Auf eine Stickstoffbegasung wird verzichtet.
Nach dem Ende der Dosierung von Lösung II, hat sich ein Druck von 2,6 bar eingestellt. Die weitere Aufarbeitung des Produktes verläuft analog zu dem Beispiel 6.
Das Polymerisat hat eine Trocksubstanz von 36,6 % und ein Molekulargewicht von Mw = 21.480.

### Beispiel 10

In einem 2 l Polymerisationsgefäß aus Glas werden 313,2 g demineralisiertes Wasser, 114,8 g Maleinsäureanhydrid und 168,5 g 50%ige Natronlauge bei 65 °C unter Rührung miteinander gelöst und dann mit 35,4 g Vinylacetat versetzt.
Anschließend werden 3 Lösungen innerhalb von 2,5 Stunden bei 65 °C in den Reaktor dosiert:
Lösung I: 146,5 g Acrylsäure, 180 g demineralisiertes Wasser
Lösung II: 22,3 g Natriumperoxodisulfat, 141,4 g demineralisiertes Wasser
Lösung III: 4,3 g Natriumdisulfit, 100,6 g demineralisiertes Wasser

Nach dem Zudosieren wird die Temperatur noch 1 Stunde gehalten und eine weitere Stunde bei 90 °C. Im Anschluß daran erfolgt die Verseifung und Neutralisation des Produktes analog zu dem Beispiel 1.
Das Polymerisat hat eine Trockensubstanz von 31,4 % und eine Viskosität von 670 mPa.s, das Molekulargewicht beträgt Mw = 132.000.

### Beispiel 11

Bis auf die eingesetzte Menge von 17,7 g Vinylacetat entspricht die Ausführung dieses Versuches der des Beispiels 10. Während der Polymerisation und Verseifung wurde kein Kohlendioxid freigesetzt.
Das Endprodukt hat einen Trockensubstanzgehalt von 30,7 % und eine Viskosität von 295 mPa.s.

### Beispiel 12

In einem Polymerisationsansatz entsprechend der Versuchsdurchführung des Beispiels 1 werden die folgenden Substanzen vorgelegt bzw. dosiert:
Vorlage: 63,8 g Maleinsäureanhydrid, 260 g demineralisiertes Wasser, 52 g 50%ige Natronlauge, 3,5 mg Eisen(II)ammoniumsulfat
Lösung I: 81,4 g Acrylsäure, 22 g demineralisiertes Wasser, 45,1 g 50%ige Natronlauge, 42,1 g Vinylacetat
Lösung II: 18,7 g 35%iges Wasserstoffperoxid, 128,4 g demineralisiertes Wasser

Nach dem Ende der Dosierung von Lösung II wird bei 85 °C 1 Stunde nachgerührt und mit einem Wasserabscheider werden 10,1 g Wasser und 2,7 g Vinylacetat abdestilliert. Die weitere Aufarbeitung der Polymerisate erfolgt wie im Beispiel 1 beschrieben.
Das Endprodukt hat einen Trocksubstanzgehalt von 30,3 % und eine Viskosität von 45 mPa.s, das Molekulargewicht beträgt Mw = 11.160.

### Beispiel 13

Hier wird das Beispiel 6 mit folgenden Änderungen wiederholt:

Lösung I besteht aus 124 g Acrylsäure, 30 g demineralisiertem Wasser, 55,1 g 50%iger Natronlauge und 117,97 g Vinylacetat.
Eine Stickstoffspülung erfolgt nicht.
Am Ende der Dosierung von Lösung II ist der Reaktorinnendruck auf 4,7 bar angestiegen. Die Trockensubstanz beträgt 36,7 %, das Molekulargewicht beträgt Mw = 17.275.

### Beispiel 14

Hier wird entsprechend Beispiel 6 in einem Druckreaktor bei 90 °C polymerisiert, eine Stickstoffspülung unterbleibt, die eingesetzten Mengen sind wie folgt:
Vorlage: 220 g demineralisiertes Wasser, 127,9 g 50%ige Natronlauge, 87,1 g Maleinsäureanhydrid
Lösung I: 166,4 g Acrylsäure, 80 g demineralisiertes Wasser, 73,9 g 50%ige Natronlauge, 30,6 g Vinylacetat
Lösung II: 210 g demineralisiertes Wasser, 33,7 g 35%iges Wasserstoffperoxid, 2 g Natriumperoxodisulfat

Nach dem Ende der Dosierung von Lösung II hat sich ein Druck von 1,7 bar aufgebaut. Die weitere Aufarbeitung des Produktes verläuft analog dem Beispiel 6. Das Polymerisat hat eine Trok-kensubstanz von 34,7 % und eine Viskosität von 320 mPa.s.

### Vergleichsbeispiel 1

In diesem Vergleichsbeispiel wird die Herstellung eines verseiften Terpolymers aus Maleinsäureanhydrid, Acrylsäure und Vinylacetat nach dem Verfahren der EP 0 497 611 Al beschrieben. Die Monomerzusammensetzung entspricht der des erfindungsgemäßen Beispiels 1.

In einem gerührten Polymerisationsreaktor werden 225 g Methylethylketon mit Stickstoff ausgeblasen, auf 80 °C erwärmt und mit 0,45 g t-Butylperoxypivalat (75%ig) versetzt. Dann werden über 2 Stunden 3 Lösungen dosiert.
Lösung I: 42,1 g Vinylacetat, 63,8 g Maleinsäureanhydrid, 81,4 g Acrylsäure
Lösung II: 7 g t-Butylperoxypivalat, 9 g Methylethylketon
Lösung III: 4,1 g Mercaptoessigsäure, 9 g Methylethylketon

Nach Dosierende wird noch 1 Stunde bei 80 °C nachgerührt und dann Methylethylketon abdestilliert.
In einer zweiten Verfahrensstufe werden 10 g des entstandenen Polymers in 40 g Wasser und 10,3 g 50%iger Natronlauge über Nacht am Rückfluß gekocht und danach mit Eisessig auf pH 7 eingestellt. Anschließend wird die Lösung in 400 ml Äthanol langsam eingetropft, wobei das Polymer ausfällt. Man wäscht mit Äthanol nach und trocknet das Polymer.

### Vergleichsbeispiel 2

Vergleichsbeispiel 2 beschreibt die Herstellung eines Maleinsäure/Vinylalkohol-Copolymers, dessen Verwendung in Waschmittelformulierungen in GB 1,284,815 empfohlen wird. Es zeigt, daß die für Waschmittel wichtige Kenngröße, das Calciumcarbonat-Dispergiervermögen solcher Polymerisate ebenfalls wesentlich schlechter ist, als bei den erfindungsgemäßen Terpolymeren.

In einem Polymerisationsreaktor werden 330 g demineralisiertes Wasser, 98 g Maleinsäureanhydrid und 80g 50%-ige Natronlauge miteinander bei 80°C gelöst und mit Stickstoff ausgeblasen. Man kühlt auf 65°C ab, gibt 68,9 g Vinylacetat dazu und dosiert innerhalb von 2,5 Stunden zwei Lösungen in den Reaktor. Lösung I besteht aus 36,8 g Natriumpersulfat, gelöst in 70 g demin. Wasser und Lösung II aus 7,0 g Natriumdisulfit und 30 g demin. Wasser. Nach dem Ende der Dosierung wird die Temperatur innerhalb von 2,5 Stunden auf 88°C erhöht, dann erfolgt die Verseifung der Acetatgruppen mit Natronlauge bei pH 11 unter Rückflußbedingungen innerhalb einer Stunde mit anschließender Neutralisation mit Salzsäure. Das Endprodukt hat einen Trockensubstanzgehalt von 36,1 %, einen pH-Wert von 7,9 und eine Viskosität von 49 mPa.s.

### Beispiel 15

In einem Polymerisationsreaktor aus Glas werden 206,6 g Maleinsäureanhydrid, 563,7 g dest. Wasser und 303,3 g 50%ige Natronlauge bei 88°C miteinander gelöst und mit 11,3 mg Eisen-II-ammoniumsulfat versetzt. Dann werden 2 Lösungen zudosiert, wobei die Lösung I aus 263,7 g Acrylsäure, 81 g dest. Wasser, 117,1 g 50%iger Natronlauge und 63,7 g Vinylacetat besteht und innerhalb von 4 Stunden zudosiert wird. Lösung II besteht aus 60,7 g 35%igem Wasserstoffperoxid, 3,6 g Natriumperoxodisulfat und 540 g Wasser und wird innerhalb von 4,5 Stunden zudosiert.. Am Ende der Dosierung erreicht die Temperatur 92°C, die noch für 15 Min. beibehalten wird. Es werden jetzt 42,8 g Destillat abgetrennt. Man stellt mit Natronlauge auf pH10 ein, verseift 1 Stunde am Rückfluß und neutralisiert mit Salzsäure. Das Polymerisat hat einen Trockensubstanzgehalt von 31,5% und eine Viskosität von 90 mPas, das Calciumcarbonatdispergiervermögen beträgt 234 mg CaCO₃/g TS. Das Molekulargewichtsmittel beläuft sich auf Mw = 21690 und das Molekulargewicht im Peakmaximum der Verteilungskurve beträgt Mp = 7860.

### Beispiel 16

114,8 g Maleinsäureanhydrid werden in 283,2 g dest. Wasser und 168,5 g 50%iger Natronlauge bei 85°C in einem Polymerisationsreaktor aus Glas gelöst und mit 6,3 mg Eisen-II-ammoniumsulfat versetzt. In einem Zeitraum von 4 Stunden werden eine Lösung aus 146,5 g Acrylsäure, 45 g dest. Wasser, 65,1 g 50%iger Natronlauge und 36,2 g Ethylenglykolmonovinylether sowie eine Lösung aus 33,7 g 35%igem Wasserstoffperoxid und 2 g Natriumpersulfat in 50 g dest. Wasser zugetropft. Die Produkttemperatur steigt dabei von 88°C nach 92°C an und wird nach dem Ende der Dosierung für 30 Min. beibehalten. Danach wird mit Schwefelsäure ein pH-Wert von 4 eingestellt und eine Stunde am Rückfluß gekocht und anschließend mit Natronlauge neutralisiert. Das Polymerisat hat einen Trockensubstanzgehalt von 40,8 % und eine Calciumcarbonatdispergierfähigkeit von 283 mg CaCO₃/g TS.

### Beispiel 17

Hier wird ein Polymerisat gemäß der Zusammensetzung des Beispiels 15 mit der Änderung hergestellt, daß der Ethylenglykolmonovinylether nicht dosiert, sondern in die Vorlage gegeben wird. Das Polymerisat hatte einen Trockensubstanzgehalt von 30,2 % und ein Caciumcarbonatdispergierver mögen von 330 mg CaCO₃/g TS.

### Beispiel 18

In einem Polymerisationsreaktor aus Glas werden 114,8 g Maleinsäureanhydrid, 130 g dest. Wasser und 168,5 g 50%ige Natronlauge miteinander bei 88 °C gelöst und mit 12,6 mg Eisen-II-ammoniumsulfat versetzt. Innerhalb von 4 Stunden werden zwei Lösungen in die Reaktorvorlage dosiert.Lösung I besteht aus 146,5 g Acrylsäure,45 g dest. Wasser, 65,1 g Natronlauge und 35,4 g Vinylacetat, Lösung II besteht aus 67,4 g 30%igem Wasserstoffperoxid, 4,0 g Natriumpersulfat und 21,3 g dest. Wasser. Nach dem Ende der Dosierung wird noch 30 Min. bei 90°C nachgerührt und anschließend 33,9 g Destillat entfernt. Anschließend wird mit Natronlauge verseift und mit Schwefelsäure neutralisiert. Das Polymerisat hat einen Trockensubstanzgehalt von 48,6 % und eine Viskosität von 2680 mPas. Das Molekulargewichtsmittel beträgt Mw = 15100 und das Molekulargewicht im Peakmaximum der Verteilunskurve Mp = 5200, das Caciumcarbonat dispergiervermögen liegt bei 314 mg CaCO₃/g TS. Der Restgehalt an Maleinsäure beträgt 190 ppm und an Acrylsäure 65 ppm, Vinylacetat liegt unter der Nachweisgrenze von 0,1 ppm.

### Beispiel 19

Der Polymerisationsansatz nach Beispiel 18 wird dahingehend modifiziert, daß nur 2,0 g Natriumpersulfat eingesetzt werden. Das Polymerisat hat einen Trockensubstanzgehalt von 48,6 % und eine Viskosität von 2540 mPas, die Molekulargewichtsmittel betragen Mw = 19700 und Mp = 8700. Die Restmonomergehalte betragen für Maleinsäure 0,1 %, für Acrylsäure 65ppm und für Vinylacetat <0,1 ppm, Acetaldehyd liegt mit 3 ppm vor.

### Beispiel 20

In einem Polymerisationsreaktor aus Glas werden bei 85 °C 114,8 g Maleinsäureanhydrid, 313,2 g dest. Wasser und 168,5 g 50%ige Natronlauge miteinander gelöst und mit 6,3 mg Eisen-II-ammoniumsulfat versetzt. Innerhalb von 4 Stunden wird eine Lösung aus 146,5 g Acrylsäure, 45 g dest. Wasser, 65,1 g 50%iger Natronlauge und 35,4 g Vinylacetat sowie innerhalb von 4,5 Stunden eine Lösung aus 33,7 g 35%igem Wasserstoffperoxid, 2,0 g Natriumpersulfat und 50 g Wasser dosiert. Während der Dosierung steigt die Temperatur auf 96°C an. Nach einer Haltezeit von 0,5 Stunden bei 90°C wird mit Natronlauge aufpH 10 eingestellt, mit 19,8 g 35 %igem Wasserstoffperoxid versetzt, 1 Stunde am Rückfluß verseift und mit Salzsäure neutralisiert. Das Polymerisat hat einen Trockensubstanzgehalt von 37,2% und eine Viskosität von 250 mPas. Das Molekulargewicht Mw beträgt 19400 und Mp liegt bei 6500. Der Restmonomergehalt an Vinylacetat beträgt < 10 ppm und an Acetaldehyd 22 ppm.

### Beispiel 21

In einem Polymerisationsreaktor aus V4A-Stahl werden bei 88°C 114,8 g Maleinsäureanhydrid, 283,2 g dest. Wasser und 168,5 g 50%ige Natronlauge miteinander gelöst und mit 6,3 mg Eisen-II-ammoniumsulfat versetzt. Dazu werden 2 Lösungen innerhalb von 4 Stunden zudosiert. Lösung I besteht aus 146,5 g Acrylsäure, 45 g dest. Wasser, 65,1 g 50%iger Natronlauge und 35,4 g Vinylacetat, Lösung II enthält 33,7 g 35%iges Wasserstoffperoxid, 2,0 g Natriumpersulfat und 50 g dest. Wasser. Am Ende der Dosierung beträgt die Produkttemperatur 92°C, bei der noch 0,5 h nachgerührt wird.Dann werden 34 g Destillat entfernt und bei 75°C 0,5% Schwefeldioxid eingeleitet, eine Stunde bei dieser Temperatur belassen und anschließend mit Natronlauge neutralisiert. Das Polymerisat hat einen Restmonomergehalt von 50 ppm Maleinsäure, <10ppm Acrylsäure und <0,1ppm Vinylacetat, das Calciumcarbonatdispergiervermögen beträgt 320 mg CaCO₃/g TS.

### Beispiel 22

In einem Polymerisationsreaktor aus V4A-Stahl werden bei 88°C die folgenden Substanzen miteinander gelöst: 114,8 g Maleinsäureanhydrid, 283,2 g Wasser, 168,5 g 50%ige Natronlauge und 6,3 mg Eisen-II-ammoniumsulfat. Dazu werden zwei Lösungen innerhalb von 4 Stunden zudosiert. Lösung I enthält: 146,5 g Acrylsäure, 45 g dest. Wasser, 65,1 g Natronlauge und 35,4 g Vinylacetat. Lösung II enthält 67,4 g 35%iges Wasserstoffperoxid, 2,0 g Natriumpersulfat und 21,3 g dest. Wasser. Nach der Dosierung wird 30 Min. nachgerührt und 10,5 g Destillat entfernt, mit Natronlauge alkalisch verseift und mit Schwefelsäure neutralisiert. Das Polymerisat hat einen Trockensubstanzgehalt von 40,4% und eine Viskosität von 320 mPas. Das Calciumcarbonatdispergiervermögen liegt bei 290 mg CaCO₃/g TS, das Molekulargewichtsmittel Mw beträgt 11700 und das Molekulargewicht im Peakmaximum der Verteilungskurve Mp ist 3500. Die Restmonomergehalte betragen für Maleinsäure 0,7%, für Acrylsäure 0,08% für Vinylacetat <0,1 ppm und für Acetaldehyd 4 ppm.

### Beispiel 23

Ein Polymerisat gemäß der Monomerzusammensetzung von Beispiel 1 wurde auf 40°C erwärmt und mittels einer Druckdüse in einem Sprühtrockner zerstäubt. Die Trocknungsbedingungen am Eingang des Sprühturms waren 170°C und am Ausgang 110°C. Das Polymerisatpulver war von weißer Farbe, rieselfähig, staubarm und hatte ein Schüttgewicht von 710 g/l, die Hauptfraktion der Pulverteilchen lag zwischen 100 und 200 µ. Die guten dispergierenden Eigenschaften des Polymerisates wurden durch die Sprühtrocknung nicht verändert.

### Beispiel 24:

In einem Polymerisationsreaktor aus Glas werden bei 85°C 114,8 g Maleinsäureanhydrid, 283,2 g dest. Wasser, 168,5 g 50 %ige Natronlauge und 12,6 mg Eisen-II-ammoniumsulfat miteinander gelöst. Dann wird mit der Dosierung von einer Lösung aus 50,6 g Wasserstoffperoxid (35%ig(, 4,0 g Natriumpersulfat und 35 g dest. Wasser über 4,5 Stunden und einer Lösung aus 146,5 g Acrylsäure, 45 g Wasser, 65,1 g Natronlauge (50%ig) und 35,4 g Vinylacetat über 4 Stunden begonnen. Während der Dosierung steigt die Temperatur im Reaktor auf 90°C. Nach Abschluß der Dosierung wird eine Temperatur von 90°C über 1,5 Stunden gehalten, anschließend Destillat entfernt, abgekühlt und mit Natronlauge neutralisiert. Das Polymerisat hat einen Trockensubstanzgehalt von 40% und eine Viskosität von 480 mPas.

### Beispiel 25:

In einem Polymerisationsreaktor aus Glas werden 300 g Polymerisat aus Beispiel 20, 80,4 g Maleinsäureanhydrid, 168,5 Natronlauge (50%ig) miteinander bei 85°C gelöst und mit 4,0 mg Eisen-II-sulfat versetzt. Innerhalb von 4 Stunden wird eine Lösung aus 146,5 g Acrylsäure, 45 g dest. Wasser, 61,1 g Natronlauge (50%ig) und 35,4 g Vinlyacetat sowie innerhalb von 4,5 Stunden eine Lösung aus 33,7 g 35%igem Wasserstoffperoxid, 2,0 g Natriumpersulfat und 50 g dest. Wasser dosiert. Nach dem Ende der Dosierung wird 1 h bei 90°C nachgerührt, 75 g Destillat entfernt, mit Natronlauge aufpH 10.5 eingestellt, mit 19,8 g Wasserstoffperoxid (35%ig) versetzt, 1 h am Rückfluß gekocht und mit Schwefelsäure neutralisiert. Der Trockensubstanzgehalt des Polymerisates beträgt 42,1 %, die Viskosität liegt bei 980 mPas, das Calciumcarbonatdispergiervermögen beträgt 270 mg CaCO3/g TS.

### Beispiel 26 - Test der Biologischen Abbaubarkeit

A. Die biologische Abbaubarkeit nach dem modifizierten STURM-Text wurde auch am Polymerisat nach Beispiel 1, 2 und Beispiel 15 getestet. Der Verlauf des Abbaus stellte sich wie folgt dar:

| **Prüfdauer** | **% biologischer Abbau** | | |
|---|---|---|---|
| | **Beispiel 1** | **Beispiel 2** | **Beispiel 15** |
| 30 Min. | 1 | 1 | - |
| 3 Tage | 5 | 6 | 18 |
| 7 Tage | 5 | 6 | 24 |
| 12 Tage | 30 | 11 | 39 |
| 17 Tage | 66 | 45 | - |
| 18 Tage | - | - | 54 |
| 21 Tage | 71 | 46 | 59 |
| 26 Tage | - | - | 70 |
| 28 Tage | 84 | 88 | 76 |

B. In einem weiteren Test nach der OECD 303A - Norm wurde die Elimination des Polymers in Gegenwart von Klärschlamm untersucht. Hierbei wurde innerhalb von 28 Tagen die Abnahme des gelösten Kohlenstoffgehaltes überprüft. Mit dem Polymer aus dem Beispiel 15 betrug die Elimination nach 28 Tagen 99%. Das Ergebnis zeigt eine hervorragende Eliminierbarkeit der erfindungsgemäßen Polymeren in Gegenwart von Klärschlamm.
C. Biologischer Abbau (ein weiterer Abbautest nach dem Kompostverfahren): Der kontrollierte kompostierende Bioabbautest (ASTM D 533 8/92) stellt eine optimierte Simulierung eines intensiven aerobischen Kompostierungsverfahrens dar, bei dem der Bioabbau einer Testsubstanz unter trockenen aerobischen Bedingungen bestimmt wird. Das Inoculum besteht aus stabilisiertem und ausgereiftem Kompost, der aus den organischen Fraktionen von echten Kommunalabfallen erhalten worden ist. Die Testverbindung wird mit dem Inoculum gemischt und in einem Statik-Reaktor eingeführt, wo sie unter optimalen Sauerstoff-, Temperatur- und Feuchtigkeitsbedingungen intensiv kompostiert wird.
Während des aerobischen Bioabbaus wird die Kohlendioxidproduktion überwacht. Der Prozentsatz an Bioabbau kann berechnet werden als der Prozentsatz an festem Kohlenstoff der Testverbindung, der unter Bildung von CO₂ in gasförmigen, mineralischen Kohlenstoff umgewandelt wurde.

| Probe | % Biologischer Abbau |
|---|---|
| Beispiel 1 | 66 |
| Beispiel 2 | 68 |
| Beispiel 20 | 89 |
| Zellulose | 88 |

### Anwendungstechnische Beispiele

### Beispiel 27 - Herstellung von Leder

Die Eignung der erfindungsgemäßen Polymerisate für die Lederherstellung wird im folgenden am Beispiel der Nachgerbung von Oberleder gezeigt. Als Beurteilungskriterien werden die Weichheit des Leders, die Narbenfestigkeit und die Fülle herangezogen. Im Vergleich zu einem handelsüblichen Nachgerbemittel auf Basis Polyacrylsäure wurde das Polymerisat nach Beispiel 1 mit folgendem Ergebnis getestet:

| | **Polymer gemäß Beispiel 1** | **Handelsübliches Polymerisat** |
|---|---|---|
| Weichheit* | 3 - 4 | 3 - 4 |
| Narbenfestigkeit* | 3 | 2 - 3 |
| Fülle | 2,1 mm | 2,0 - 2,1 mm |

| | | |
|---|---|---|
| * Die Bewertungsrangfolge ist 1 - 6, wobei 1 die beste Bewertung darstellt. | | |

### Beispiel 28 - Bestimmung der Calciumcarbonat-Dispergierfahigkeit

Ein wesentliches Eigenschaftsmerkmal von Cobuildern in Wasch- und Reinigungsmitteln ist die Fähigkeit zur Verhinderung schwerlöslicher Niederschläge von Erdalkali- oder Schwermetallsalzen, die z. B. Inkrustationen auf Wäschestücken hervorrufen. Für die Bestimmung der Calciumcarbonat-Dispergierfähigkeit (CCDK) [nach Richter Winkler in Tenside Surfactants Detergents 24 (1987) S. 213 - 216] wurde wie folgt vorgegangen:

1 g Produkt wird in 100 ml Wasser dest. gelöst und mit 10 ml 10%iger Natriumcarbonat-Lösung versetzt. Mit Natronlauge wird ein pH-Wert von 11 eingestellt und mit 0,25 ml Calciumacetat-Lösung bis zum Auftreten einer ersten dauerhaften Trübung titriert. Die Angabe der CCDK erfolgt in mg CaCO3/g Trockensubstanz

| **Beispiel Nr.** | **CCDK [mg CaCO3/g T.S.]** |
|---|---|
| 1 | 273 |
| 2 | 239 |
| 3 | 248 |
| 4 | 216 |
| 5 | 220 |
| 6 | 228 |
| 7 | 244 |
| 8 | 201 |
| 9 | 238 |
| 10 | 277 |
| 11 | 275 |
| 12 | 196 |
| 13 | 212 |
| 14 | 236 |
| 15 | 234 |
| 16 | 283 |
| 17 | 330 |
| 18 | 314 |
| 21 | 320 |
| 22 | 290 |
| Vergleichsbeispiel 1 | 135 |
| Vergleichsbeispiel 2 | 129 |
| Handelsprodukt auf Basis Maleinsäure/Acrylsäure) | 258 |

Anhand der Vergleichsbeispiele wird gezeigt, daß Polymerisate sowohl hergestellt nach der EP 0 497 611 A1 als auch bekannte Copolymerisate ein schlechteres CaCO3-Dispergiervermögen haben als erfindungsgemäße Produkte.

### Beispiel 29 - Bestimmung der Beständigkeit gegenüber hartem Wasser

Zu einem Prüfwasser von 33,6 °dH (reine Calciumhärte) wird eine bestimmte Menge 10%iger Polymer-Lösung gegeben, 5 Minuten auf einer Heizplatte gekocht und anschließend optisch bezüglich Klarheit, Opaleszenz und Trübung beurteilt. Durch Variation der Menge an Copolymer wird die Konzentration an Gramm Produkt (Trockensubstanz) pro Liter Hartwasser ermittelt, bei der nach vorhergehender Trübung/Opaleszenz erstmals eine klare Lösung auftritt.

Die Ergebnisse machen deutlich, daß mit den erfindungsgemäßen Polymerisaten eine wirksame Inhibierung von Kesselstein oder ähnlichen Ablagerungen erreicht bzw. Ausfällungen von Bestandteilen des Hartwassers verhindert werden kann.

| **Produkt Beispiel** | **Hartwasserbeständigkeit klar bei (g T.S./l)** |
|---|---|
| 1 | 1,5 |
| 2 | 1,5 - 2,0 |
| 3 | 2,0 - 2,5 |
| 5 | 2,0 |
| Lavoral S 312 (Handelsprodukt der Chemischen Fabrik Stockhausen GmbH auf Basis Polyacrylsäure) | 1,5 - 2,0 |
| Handelsprodukt auf Basis Maleinsäure/Acrylsäure-Copolymer | 2,0 |

### Beispiel 30 - Waschversuch

Die Waschwirkung der erfindungsgemäßen Polymerisate wurde unter Verwendung eines Baumwollgewebes überprüft. Die Polymerisate wurden als Komponente in einer phosphatfreien Waschrezeptur im Waschversuch mit diesen Testgeweben eingesetzt. Zur Auswertung wurde der Aschegehalt der Testgewebe nach 10 Waschzyklen bestimmt und in Relation zum Aschegehalt von Testgeweben aus Waschversuchen ohne Polymerisatzusatz gesetzt. Der Quotient aus der aus Polymersatzusatz reduzierten Asche zu dem Aschegehalt ohne Polymerisatzusatz ist ein Maß für die inkrustationsinhibierende Wirkung des Polymers. Zu Vergleichszwecken wurde ein handelsübliches Copolymerisat aus 70% Acrylsäure und 30% Maleinsäure herangezogen. Die Waschrezeptur war wie folgt aufgebaut:
- 7,0 % LAS
- 2,0 % ethoxylierter C13/15-Alkohol (7 Mol EO)

- 2,0 % Seife
- 3,0 % Natriumsilikat
- 27,0% Zeolith A
- 1,0% Carboxymethylcellulose
- 10,0% Natriumcarbonat
- 18,0% Natriumsulfat
- 20,0% Natriumperborat
- 4,0% Polymerisat (Beispiel 1 bzw. Handelsprodukt) Trockensubstanz
- 3,0% Wasser

| Polymerisat | Inkrustationsinhibierung * |
|---|---|
| Beispiel 1 | 0,51 |
| Handelsprodukt | 0,49 |

| | |
|---|---|
| * Der Bewertungsbereich liegt bei: 0 - 1, 1,0 bedeutet eine völlige Verhinderung der Inkrustation (Ascheablagerung) auf dem Gewebe, 0 bedeutet keine Aschereduktion durch den Polymerisatzusatz | |

Das Ergebnis der Waschversuche zeigt, daß die erfindungsgemäßen Polymerisate in den phosphatfreien Waschmitteln eine gute inkrustationsinhibierende Wirkung zeigen und somit mit der Wirkung des handelsüblichen Polymeren vergleichbar bzw. besser sind.

### Beispiel 31 - Messung des hydrophilen Suspendiervermögens

Das Schmutztragevermögen von Waschmittelbuildern kann durch die Bestimmung des hydrophilen Suspendiervermögens charakterisiert werden. Dabei wird als Maß für das Schmutztragevermögen das Suspendiervermögen gegenüber pulverisiertem Eisenoxid angesehen. Die Bestimmung des Suspendiervermögens erfolgt durch photometrische Trübungsmessung einer Suspension, die aus der Prüfsubstanz, einem Eisenoxid-Pigment und dem Tensid MARLON A (Alkylbenzolsulfonat der Fa. Hüls AG, Marl) besteht. In einem Schüttelzylinder wird das Eisenoxid in einer wäßrigen Lösung der Testsubstanz unter Zusatz von MARLON A intensiv geschüttelt und nach 24 Stunden die Stärke der dann noch zu beobachtenden Trübung photometrisch bestimmt. Gemessen wird die Extinktion E₄₅₀ bei 450 nm in einer 1 cm-Küvette. Die Ermittelten Extinktionswerte stellen Maßzahlen für das hydrophile Suspendiervermögen dar. Produkte mit hoher Suspendieraktivität stabilisieren die Pigmente in der wäßrigen Phase und weisen hohe Extinktionswerte auf.

| **Produkt** | **Extinktion E**_{**450**} |
|---|---|
| Polymerisat nach Beispiel 21 | 40 |
| Handelsübliches Maleinsäure/Acrylsäure Copolymer | 6 |

Das Ergebnis zeigt für die erfindungsgemäßen Polymerisate ein sehr gutes hydrophiles Suspendiervermögen, wohingegen ein handelsübliches Polymer, das im Waschmittelbereich als Cobuilder eingesetzt wird, deutlich schlechter abschneidet.

### Beispiel 32 - Messung der Inhibierung von Calcium- und Magnesiumsalzablagerungen

Es wird geprüft, ob in einem Wasserkreislauf durch den Zusatz von copolymeren Polycarboxylaten das Kristallwachstum inhibiert und somit Ablagerungen von Carbonaten verhindert werden können.

Ein Testwasser, das Calcium- und Magnesiumbicarbonat in gelöster Form enthält (5,36 mmol Ca²⁺/l, 1,79 mmol Mg²⁺, 10 mmol CO₃²-/l), wird mit 5ppm Copolymer versetzt und durch die temperierte (75°C) Glasspirale eines Dimrothkühlers mit konstanter Durchflussgeschwindigkeit geleitet. Hierbei bilden sich in der Glasspirale in der Regel Calcium- und Magnesiumcarbonatablagerungen. Diese werden dann mit einer Säure abgelöst und komplexometrisch bestimmt. Die Ablagerungen mit und ohne Copolymer werden dann zueinander ins Verhältnis gesetzt.

| **Polymerisat** | **Rückstand im Kühler in mg** | | **% Inhibierung** | |
|---|---|---|---|---|
| | **Ca** | **Mg** | **Ca** | **Mg** |
| ohne | 57 | 36 | - | - |
| Beispiel 1 | 9 | 6 | 84 | 83 |
| Beispiel 15 | 10 | 8 | 82 | 78 |
| Beispiel 20 | 7 | 5 | 88 | 86 |
| Handelsübliches Maleinsäure/Acrylsäure Copolymerisat | 11 | 9 | 80 | 75 |

Die erfindungsgemäßen Copolymerisate zeigen ein gutes Inhibierungsverhalten bezüglich Calcium- und Magnesiumcarbonatsalzen. Diese Eigenschaft kommt z. B. vorteilhaft in Waschprozessen und in Kühlwasserkreisläufen zur Geltung. Maleinsäure/Acrylsäure-Copolymere zeigen ein schlechteres Inhibierungsverhalten.

### Beispiel 33 - Dispergierversuche

Um die dispergierende Wirkung der erfindungsgemäßen Copolymere auf Pigmentsuspensionen zu zeigen, wurde Talkum (Finntalc C10, Fa. OMYA) in wäßrige Copolymerlösungen von pH 12 bis zu einem Pigmentgehalt von 66% eingerührt und die Viskosität sofort und nach 7 Tagen gemessen und die Aufrührbarkeit mit 1 - 6 benotet. Als Stand der Technik wurde die Kombination aus POLYSALZ S/LUMITEN P-T (Fa. BASF AG) herangezogen. Der Zusatz des Dispergiermittels betrug 0,2%/atro Pigment bzw. im Falle von POLYSALZ/LUMITEN entsprechend der praxisüblichen Konzentrationen von 0,15/1,0 %/atro Pigment.

| **Dispergator** | **Slurryviskosität (mPas,Brookf., 100 rpm)** | | **Aufrührbarkeit** **1:sehr gut** **6:sehr schlecht** |
|---|---|---|---|
| | **sofort** | **7 Tage** | |
| Beispiel 1 | 440 | 210 | 3 |
| POLYSALZ S/LUMITEN PT | 280 | 340 | 3 |

### Beispiel 34 - Verwendung der erfindungsgemäßen Polymeren nach Beispiel 22 als Bleichstabilisatoren

A. Rohfaserbleiche
   - Rezeptur:: 1,0 g/l Sultafon UNS neu
   0,8 g/l Magnesiumchlorid
   5,0 g/l Polymerisat nach Beispiel 22
   15,0 ml/l NaOH 50%ig
   35,0 ml/l Wasserstoffperoxid 35%ig

   Weichwasser wird vorgelegt; die Rezepturbestandteile werden in der genannten Reihenfolge unter Rühren zugeben.
   Vor der Zugabe der Natronlauge (50%ig) und des Wasserstoffperoxids (35%ig) wird das Polymerisat in Wasser gelöst.
   Verfahrensschritte entsprechend dem Beispiel einer kontinuierlichen Pad-Steam-Anlage:
   Imprägnieren der Ware mit der Bleichflotte
   Imprägnierabteil, Warengeschwindigkeit 20 m/min

   Abquetschen auf eine Flottenaufnahme von 70 - 80 %
   Walzenquetschwerk

   Dämpfen, Sattdampf 98°C, 20 min
   geschlossener Ablagedämpfer

   Auswaschen über 4 Waschabteile
   1. Waschabteil: 90°C
   2. Waschabteil: 60°C
      1-2 ml/l Solopol POE (Peroxideliminator)
   3. Waschabteil: 40°C
   4. Waschabteil: kalt

   Trocknen
   Durchführung im Laborversuch:
   Imprägnieren am Foulard, Flottenaufnahme 81,5%
   Walzendruck: 1,8 bar
   Dämpfen mit Sattdampf bei 98°C, 20 min
   heiß und kalt ausspülen, jeweils 10 min
   Trocknen
   - erreichter Weißgrad:: 81,5 %,
   gemessen mit Elrepho-Gerät, Filter 7
   (Sultafon UNS neu und Solopol POE sind Handelsprodukte der Firma Stockhausen GmbH)
B. Auswirkung der Wasserhärte auf das Stabilisienvermögen des Polymerisats nach Beispiel 22 in Bleichflotten
   - Rezeptur:: 1,0 g/l Sultafon UNS neu
   x g/l Magnesiumchlorid zur Einstellung der Wasserhärte
   3,5 g/l Polymerisat nach Beispiel 22
   9,2 g/l NaOH 50%ig
   35,0 ml/l Wasserstoffperoxid 35%ig

   - Prüfungstemperatur :: 80°C
   - Prüfungsdauer :: 180 min
   - Gerät :: Zeltex
   - Titrationsvorlage :: 10 ml
   - Titrationsmitel :: 0,1n Kaliumpermanganat-Lsg

| | **bei 16°dH** | | **bei 20°dH** | |
|---|---|---|---|---|
| Zeit in min | im Bad vorhandene H₂O₂-Menge in ml | Prozent | im Bad vorhandene H₂O₂-Menge in ml | Prozent |
| 0 | 36,2 | 100,0 | 35,3 | 100,0 |
| 30 | 30,8 | 85,1 | 32,9 | 93,3 |
| 60 | 29,2 | 80,8 | 31,7 | 89,8 |
| 90 | 28,2 | 77,9 | 29,9 | 84,7 |
| 120 | 25,9 | 71,5 | 27,1 | 76,8 |
| 150 | 25,0 | 69,0 | 26,1 | 74,0 |
| 180 | 24,5 | 67,7 | 18,8 | 67,7 |

### Beispiel 35 - Waschversuche mit einer phosphat- und zeolithfreien Rezeptur

Die hervorragende Waschwirkung der erfindungsgemäßen Polymerisate wurde in weiteren Waschversuchen mit Waschmittelrezepturen ohne Phosphat und ohne Zeolith gezeigt. Zum Vergleich wurde ein handelsübliches Copolymerisat aus Maleinsäure/Acrylsäure (30/70Gew.%) mit herangezogen. Es wurde Baumwollprüfgewebe in Haushaltswaschmaschinen bei 95°C unter Verwendung von Wasser mit 13°dH gewaschen und nach 12 Waschzyklen hinsichtlich Aufhellung und Inkrustierung untersucht. Die Waschmittelrezeptur hatte die folgende Zusammensetzung:
6% Alkylbezolsulfonat
5% C13-Fettalkoholethoxylat(7 Mol EO)
5% Pulverseife
25% Natriumcarbonat
4% Natriumsulfat
15% Natriumperborat
25% Natriumbicarbonat
5% Natriummetasilikat
10% Copolymer(100%ig)

| **Polymerisat** | **% Aufhellung** | **% Restasche** |
|---|---|---|
| Beispiel 22 | 86 | 0,4 |
| Handelsprodukt | 86 | 0,85 |
| ohne | 58 | 1,35 |

Die erfindungsgemäßen Polymerisate zeigen demnach eine ausgezeichnete Waschwirkung und sind den Copolymeren auf Basis Acrylsäure/Maleinsäure deutlich überlegen.

## Patentansprüche

1. Biologisch abbaubare, für Wasch- und Reinigungsmittel geeignete Polymere aus
a) polymerisierten, monoethylenisch ungesättigten Dicarbonsäuren und/oder deren Salzen,
b) polymerisierten, monoethylenisch ungesättigten Monocarbonsäuren und/oder deren Salzen,
c) polymerisierten, monoethylenisch ungesättigten Monomeren, die nach Hydrolyse oder Verseifung eine oder mehrere an der C-C-Kette kovalent gebundene Hydroxylgruppen aufweisen und gegebenenfalls
d) weiteren polymerisierten, radikalisch copolymerisierbaren Monomeren,
erhältlich durch wenigstens teilweise Neutralisation der sauren Monomeren a), b) und gegebenenfalls d), radikalische Polymerisation der Monomeren a) bis d) sowie Hydrolyse bzw. Verseifung der polymerisierten Monomereinheiten c) zu an der C-C-Kette des Polymeren kovalent gebundene Hydroxylgruppen in wäßrigem Medium, wobei die Polymeren eine biologische Abbaurate von ≥ 60 % (BOD) nach 28 Tagen aufweisen.

2. Biologisch abbaubare, für Wasch- und Reinigungsmittel geeignete Polymere nach Anspruch 1, dadurch gekennzeichnet, daß sie aus
a) 10 - 70 Gew% monoethylenisch ungesättigten C4-⁸-Dicarbonsäuren bzw. deren Salzen
b) 20 - 85 Gew% monoethylenisch ungesättigten C3-¹⁰-Monocarbonsäuren bzw. deren Salzen
c) 1 - 50 Gew% einfach ungesättigten Monomeren, die nach Hydrolyse oder Verseifung zu Monomereinheiten mit einer oder mehreren an der C-C-Kette kovalent gebundenen Hydroxylgruppen umgewandelt werden können und
d) 0 - 10 Gew% weiteren, radikalisch copolymerisierbaren Monomeren aufgebaut sind.
wobei die Summe der Monomeren von a) bis d) 100 Gew.% beträgt.

3. Biologisch abbaubare, für Wasch- und Reinigungsmittel geeignete Polymere nach Anspruch 1 und 2, dadurch gekennzeichnet, daß sie aus
a) vorzugsweise 20 - 60 Gew%, besonders bevorzugt 25 - 55 Gew% monoethylenisch ungesättigten C4-⁸-Dicarbonsäuren bzw. deren Salzen
b) vorzugsweise 25 - 60 Gew%, besonders bevorzugt 30 - 60 Gew% monoethylenisch ungesättigten C3-¹⁰-Monocarbonsäuren bzw. deren Salzen
c) vorzugsweise 4 - 40 Gew%, besonders bevorzugt 8 - 30 Gew% einfach ungesättigten Monomeren, die nach Hydrolyse oder Verseifung zu Monomereinheiten mit einer oder mehreren an der C-C-Kette kovalent gebundenen Hydroxylgruppen umgewandelt werden können und
d) 0 - 10 Gew% weiteren, radikalisch copolymerisierbaren Monomeren aufgebaut sind,
wobei die Summe der Monomeren von a) bis d) 100 Gew.% beträgt.

4. Biologisch abbaubare, für Wasch- und Reinigungsmittel geeignete Polymere nach den Ansprüchen 1 - 3, dadurch gekennzeichnet, daß sie als Monomerenkomponente a) Maleinsäure, Itaconsäure und Fumarsäure bzw. deren Salze, als Monomerenkomponente b) Acryl- oder Methacrylsäure bzw. deren Salze und als Monomerenkomponente c) Vinylacetat, Vinylpropionat, Ethylenglycolmonovinylether und/oder Methylvinylether enthalten.

5. Biologisch abbaubare, für Wasch- und Reinigungsmittel geeignete Polymere nach den Ansprüchen 1 - 4, dadurch gekennzeichnet, daß sie durch radikalische Polymerisation und Hydrolyse oder Verseifung in wäßrigem Medium gebildet werden und eine biologische Abbaurate von > 80% (BOD) nach 28 Tagen aufweisen.

6. Verfahren zur Herstellung von biologisch abbaubaren, für Wasch- und Reinigungsmittel geeigneten Polymeren aus
a) monoethylenisch ungesättigten Dicarbonsäuren und/oder deren Salzen,
b) monoethylenisch ungesättigten Monocarbonsäuren und/oder deren Salzen,
c) monoethylenisch ungesättigten Monomeren, die nach Hydrolyse oder Verseifung zu Monomereinheiten mit einer oder mehreren an der C-C-Kette kovalent gebundenen Hydroxylgruppen umgewandelt werden und
d) gegebenenfalls weiteren, radikalisch copolymerisierbaren Monomeren, dadurch gekennzeichnet, daß die sauren Monomeren a), b) und gegebenenfalls d) wenigstens teilweise neutralisiert, die Monomeren a) bis d) radikalisch polymerisiert und die polymerisierten Monomereinheiten c) zu an der C-C-Kette des Polymeren kovalent gebundene Hydroxylgruppen in wäßrigem Medium hydrolisiert bzw. verseift werden, wobei die Polymere eine biologische Abbaurate von ≥ 60 % (BOD) nach 28 Tagen aufweisen.

7. Verfahren zur Herstellung von biologisch abbaubaren, für Wasch- und Reinigungsmittel geeigneten Polymeren nach Anspruch 6, dadurch gekennzeichnet, daß die Polymerisation in wäßriger Lösung bei 40 - 180 °C, vorzugsweise bei 60 - 120 °C durchgeführt wird.

8. Verfahren zur Herstellung von biologisch abbaubaren, für Wasch- und Reinigungsmittel geeigneten Polymeren nach den Ansprüchen 6 und 7, dadurch gekennzeichnet, daß die Dicarbonsäuren und mindestens eine Teilmenge des hydrolysierbaren bzw. verseifbaren Monomeren gemeinsam im Reaktionsgefäß vorgelegt und die verbleibenden Monomeren während der Polymerisation zugefügt werden und die Polymerisation ggf. im geschlossenen Polymerisationsreaktor durchgeführt wird.

9. Verfahren zur Herstellung von biologisch abbaubaren, für Wasch- und Reinigungsmittel geeigneten Polymeren nach den Ansprüchen 6 bis 8, dadurch gekennzeichnet, daß Dicarbonsäuren eingesetzt werden, die aus Dicarbonsäureanhydriden durch Hydrolyse vor der Polymerisation und Teilneutralisation erhalten werden.

10. Verfahren zur Herstellung von biologisch abbaubaren, für Wasch- und Reinigungsmittel geeigneten Polymeren nach den Ansprüchen 6 bis 9, dadurch gekennzeichnet, daß als Monomerenkomponente a) Maleinsäure, Itaconsäure und Fumarsäure bzw. deren Salze, als Monomerenkomponente b) Acryl- oder Methacrylsäure bzw. deren Salze und als Monomerenkomponente c) Vinylacetat, Vinylpropionat, Ehtylenglycolmonovinylether und/oder Methylvinylether verwendet werden.

11. Verfahren zur Herstellung von biologisch abbaubaren, für Wasch- und Reinigungsmittel geeigneten Polymeren nach den Ansprüchen 6 bis 10, dadurch gekennzeichnet, daß die Hydrolyse oder Verseifung mit Alkalihydroxiden in Gegenwart von Wasserstoffperoxid oder mit Schwefeldioxid bevorzugt nach der Polymerisation durchgeführt wird.

12. Verwendung der Polymerisate nach den Ansprüchen 1 - 11 als Zusatz bzw. Cobuilder in Waschmitteln.

13. Verwendung der Polymerisate nach den Ansprüchen 1 - 11 als Zusatz zu Reinigungsmitteln.

14. Verwendung der Polymerisate nach den Ansprüchen 1 - 11 bei der Vorbehandlung von Baumwolle, insbesondere beim Abkochen, Beuchen und Bleichen.

15. Verwendung der Polymerisate nach den Ansprüchen 1 - 11 als Stabilisatoren bei der Peroxidbleiche

16. Verwendung der Polymerisate nach den Ansprüchen 1 - 11 als Zusatz bzw. Waschhilfsmittel bei Färbereiprozessen.

17. Verwendung der Polymerisate nach den Ansprüchen 1 - 11 als Hilfmittel beim Textildruck.

18. Verwendung der Polymerisate nach den Ansprüchen 1 - 11 als Zusatz in Textilfaserschlichten.

19. Verwendung der Polymerisate nach den Ansprüchen 1 - 11 als Hilfsmittel bei der Lederherstellung.

20. Verwendung der Polymerisate nach den Ansprüchen 1 - 11 als Hilfsmittel bei der Lederherstellung beim Weichen, Äschern, insbesondere in Waschprozessen nach dem Aschern und insbesondere bei der Entkälkung und bei der CO₂-Entkälkung.

21. Verwendung der Polymerisate nach den Ansprüchen 1 - 11 als Zusatz beim Vorgerben, Gerben und bei der Nachgerbung.

22. Verwendung der Polymerisate nach den Ansprüchen 1 - 11 zur Inhibierung der Wasserhärte und als Belagsverhinderer.

23. Verwendung der Polymerisate nach den Ansprüchen 1 - 11 als Dispergiermittel.

## Claims

1. Biodegradable polymers suitable for the use in detergents and cleaning agents of
a) polymerized, monoethylenically unsaturated dicarboxylic acids and/or the salts thereof,
b) polymerized, monoethylenically unsaturated monocarboxylic acids and/or the salts thereof,
c) polymerized, monoethylenically unsaturated monomers which, after hydrolysis or saponification, have one or several hydroxyl groups covalently bonded to the C-C-chain, and optionally
d) further polymerized, radically copolymerizable monomers,
obtainable by an at least partial neutralization of the acid monomers a), b) and optionally d), radical polymerization of the monomers a) to d), and hydrolysis or saponification of the polymerized monomer units c) to form hydroxyl groups covalently bonded to the C-C-chain of the polymer in aqueous medium, the polymers exhibiting a biological degradation rate of ≥ 60% (BOD) after 28 days.

2. The biodegradable polymers suitable for detergents and cleaners according to claim 1 characterized in that they are built up of
a) 10 - 70%-wt, monoethylenically unsaturated C₄-₈-dicarboxylic acids or the salts thereof,
b) 20 - 85%-wt. monoethylenically unsaturated C₃-₁₀-monocarboxylic acids or the salts thereof,
c) 1 - 50%-wt. monounsaturated monomers which, after hydrolysis or saponification, can be converted into monomer units having one or more hydroxyl groups covalently bonded to the C-C-chain, and
d) 0 - 10%-wt. further radically copolymerizable monomers,
with the sum of the monomers according to a) to d) amounting to 100%-Wt.

3. The biodegradable polymers suitable for detergents and cleaners according to claim 1 and 2 characterized in that they are built up of
a) preferably 20 - 60%-wt., most preferably 25 - 55%-wt. monoethylenically unsaturated C₄₋₈-dicarboxylic acids or the salts thereof,
b) preferably 25 - 60%-wt., most preferably 30 - 60%-wt. monoethylenically unsaturated C₃₋₁₀-monocarboxylic acids or the salts thereof,
c) preferably 4 - 40%-wt., most preferably 8 - 30%-wt. monounsaturated monomers which, after hydrolysis or saponification, can be converted to monomer units with one or more hydroxyl groups covalently bonded to the C-C-chain, and
d) 0 - 10%-wt. further radically copolymerizable monomers,
with the sum of the monomers according to a) to d) amounting to 100%-wt.

4. The biodegradable polymers suitable for detergents and cleaners according to claims 1 - 3 characterized in that they comprise as monomer component a) maleic acid, itaconic acid, and fumaric acid or the salts thereof, that they comprise as monomer component b) acrylic or methacrylic acid or the salts thereof, and that they comprise as monomer component c) vinyl acetate, vinyl propionate, ethylene glycol monovinyl ether, and/or methyl vinyl ether.

5. The biodegradable polymers suitable for detergents and cleaners according to claims 1 - 4 characterized in that they are formed by radical polymerization and hydrolysis or saponification in aqueous medium and have a biological degradation rate of > 80% (BOD) after 28 days.

6. A process for producing biodegradable polymers suitable for the use in detergents and cleaners of
a) monoethylenically unsaturated dicarboxylic acids and/or the salts thereof,
b) monoethylenically unsaturated monocarboxylic acids and/or the salts thereof,
c) monoethylenically unsaturated monomers which, after hydrolysis or saponification, are converted into monomer units having one or several hydroxyl groups covalently bonded to the C-C-chain, and
d) optionally further, radically copolymerizable monomers, characterized in that the acid monomers a), b) and optionally d) are at least partially neutralized, the monomers a) to d) are radically polymerized, and that the polymerized monomer units c) are hydrolyzed or saponified in aqueous medium into hydroxyl groups covalently bonded to the C-C-chain of the polymer, the polymers having a biological degradation rate of ≥ 60% (BOD) after 28 days.

7. The process for the production of biodegradable polymers suitable for detergents and cleaners according to claim 6 characterized in that the polymerization is carried out in aqueous solution at 40 - 180°C, preferably at 60 - 120°C.

8. The process for the production of biodegradable polymers suitable for detergents and cleaners according to claims 6 and 7, characterized in that the dicarboxylic acids and at least a partial amount of the hydrolyzable or saponifiable monomer are placed in the reaction vessel together, and the remaining monomers are added during the polymerization, and that the polymerization is optionally carried out in a closed polymerization reactor.

9. The process for the production of biodegradable polymers suitable for detergents and cleaners according to claims 6 to 8, characterized in that dicarboxylic acids are used which are obtained from dicarboxylic acid anhydrides by hydrolysis prior to polymerization and partial neutralization.

10. The process for the production of biodegradable polymers suitable for detergents and cleaners according to claims 6 to 9, characterized in that maleic acid, itaconic acid, and fumaric acid or the salts thereof are used as monomer component a), acrylic or methacrylic acid or the salts thereof are used as monomer component b), and vinyl acetate, vinyl propionate, ethylene glycol monovinyl ether, and/or methyl vinyl ether are used as monomer component c).

11. The process for the production of biodegradable polymers suitable for detergents and cleaners according to claims 6 to 10 characterized in that the hydrolysis or saponification is carried out with alkali hydroxides in the presence of hydrogen peroxide or with sulfur dioxide, preferably after the polymerization.

12. The use of the polymers according to claims 1 - 11 as additive or cobuilder in detergents.

13. The use of the polymers according to claims 1 - 11 as additive in cleaning agents.

14. The use of the polymers according to claims 1 - 11 in the pretreatment of cotton, in particular in boiling off, kier scouring and bleaching.

15. The use of the polymers according to claims 1 - 11 as stabilizers in peroxide bleaching.

16. The use of the polymers according to claims 1 - 11 as additive or washing auxiliary in dyeing processes.

17. The use of the polymers according to claims 1 - 11 as auxiliary agent in textile printing.

18. The use of the polymers according to claims 1 - 11 as additive in textile fiber sizes.

19. The use of the polymers according to claims 1 - 11 as auxiliary agent in the manufacture of leather.

20. The use of the polymers according to claims 1 - 11 as auxiliary agent in the leather manufacture in soaking, liming, in particular in washing processes after liming, and particularly in deliming and CO₂-deliming.

21. The use of the polymers according to claims 1 - 11 as additive in pretanning, tanning and retanning.

22. The use of the polymers according to claims 1 - 11 for the inhibition of water hardness and as anti-deposition agent.

23. The use of the polymers according to claims 1 - 11 as dispersing agent.

## Revendications

1. Agents de lavage et de nettoyage, biologiquement dégradables, constitués
a) d'acides dicarboxyliques monoéthyléniquement insaturés, polymérisés, et/ou de leurs sels,
b) d'acides monocarboxyliques monoéthyléniquement insaturés, polymérisés, et/ou de leurs sels,
c) de monomères monoéthyléniquement insaturés, polymérisés, qui, après hydrolyse ou saponification, présentent un ou plusieurs radicaux hydroxyle liés par covalence à la chaîne C-C et, éventuellement,
d) d'autres monomères polymérisés, copolymérisables par voie radicalaire,
que l'on peut obtenir par la neutralisation au moins partielle des monomères acides a), b) et éventuellement d), la polymérisation radicalaire des monomères a) à d), ainsi que l'hydrolyse ou la saponification des unités monomériques polymérisées c) en radicaux hydroxyle liés par covalence à la chaîne C-C du polymère en milieu aqueux, où les polymères présentent un taux de dégradation biologique égal ou supérieur à 60% (DOB) après 28 jours.

2. Polymères biologiquement dégradables, convenant comme agents de lavage et de nettoyage, suivant la revendication 1, caractérisés en ce qu'ils sont constitués de
a) 10 à 70% en poids d'acides dicarboxyliques en C₄ à C₈ monoéthyléniquement insaturés ou de leurs sels,
b) 20 à 85% en poids d'acides monocarboxyliques en C₃ à C₁₀ monoéthyléniquement insaturés ou de leurs sels,
c) 1 à 50% en poids de monomères monoinsaturés, qui, après hydrolyse ou saponification, peuvent être convertis en unités monomérique avec un ou plusieurs radicaux hydroxyle, liés par covalence avec une chaîne C-C, et
d) 0 à 10% en poids d'un autre monomère copolymérisable par voie radicalaire,
où la somme des monomères de a) à d) forme 100% en poids.

3. Polymères biologiquement dégradables, convenant comme agents de lavage et de nettoyage suivant l'une quelconque des revendications 1 et 2, caractérisés en ce qu'ils sont constitués de
a) de préférence, 20 à 60% en poids, de manière particulièrement avantageuse, 25 à 55% en poids, d'acides dicarboxyliques en C₄ à C₈ monoéthyléniquement insaturés ou de leurs sels,
b) de préférence, 25 à 60% en poids, de manière particulièrement avantageuse, 30 à 60% en poids, d'acides monocarboxyliques en C₃ à C₁₀ monoéthyléniquement insaturés ou de leurs sels,
c) de préférence, 4 à 40% en poids, de manière particulièrement avantageuse, 8 à 30% en poids, de monomères monoinsaturés, qui, après hydrolyse ou saponification, peuvent être convertis en unités monomériques avec un ou plusieurs radicaux hydroxyle liés de manière covalente à la chaîne C-C, et
d) 0 à 10% en poids d'autres monomères copolymérisables par voie radicalaire,
où la somme des monomères de a) à d) forme 100% en poids.

4. Polymères biologiquement dégradables, convenant comme agents de lavage et de nettoyage suivant l'une quelconque des revendications 1 à 3, caractérisés en ce qu'ils contiennent, à titre de composant monomérique a), de l'acide maléique, de l'acide itaconique et de l'acide fumarique ou leurs sels, à titre de composant monomérique b), de l'acide acrylique ou de l'acide méthacrylique ou leurs sels et à titre de composant monomérique c), de l'acétate de vinyle, du propionate de vinyle, de l'éther monovinylique de l'éthylèneglycol et/ou de l'éther méthylvinylique.

5. Polymères biologiquement dégradables, convenant comme agents de lavage et de nettoyage, suivant l'une quelconque des revendications 1 à 4, caractérisés en ce qu'ils sont obtenus par polymérisation radicalaire et hydrolyse ou saponification en milieu aqueux et présentent un taux de dégradation biologique supérieur à 80% (DOB) après 28 jours.

6. Procédé de préparation de polymères convenant à titre d'agents de lavage et de nettoyage, biologiquement dégradables, constitués
a) d'acides dicarboxyliques monoéthyléniquement insaturés et/ou de leurs sels,
b) d'acides monocarboxyliques monoéthyléniquement insaturés et/ou de leurs sels,
c) de monomères monoéthyléniquement insaturés qui sont convertis, après hydrolyse ou saponification, en unités monomériques comportant un ou plusieurs radicaux hydroxyle liés par covalence à la chaîne C-C et
d) éventuellement d'autres monomères copolymérisables par voie radicalaire, caractérisés en ce que l'on neutralise au moins partiellement les monomères acides a), b) et éventuellement d), on polymérise les monomères a) à d) par voie radicalaire et on hydrolyse ou saponifie les unités monomériques polymérisées c) en radical hydroxyle liés par covalence à la chaîne C-C du polymère en milieu aqueux, où les polymères présentent un taux de dégradation biologique égal ou supérieur à 60% (DOB) après 28 jours.

7. Procédé de fabrication de polymères biologiquement dégradables, convenant comme agents de lavage et de nettoyage suivant la revendication 6, caractérisé en ce que l'on entreprend la polymérisation en solution aqueuse à 40-180°C, de préférence 60-120°C.

8. Procédé de préparation de polymères convenant comme agents de lavage et de nettoyage biologiquement dégradables suivant l'une quelconque des revendications 6 et 7, caractérisé en ce que l'on dispose au préalable les acides dicarboxyliques et au moins une proportion partielles des monomères hydrolysables ou saponifiables en commun dans le récipients de réaction et on ajoute les monomères résiduels au cours de la polymérisation et on entreprend la polymérisation éventuellement dans un réacteur de polymérisation fermé.

9. Procédé de préparation convenant comme agents de lavage et de nettoyage biologiquement dégradables suivant l'une quelconque des revendications 6 à 8, caractérisé en ce que l'on utilise des acides dicarboxyliques qui ont été obtenus à partir d'anhydrides d'acides dicarboxyliques par hydrolyse avant la polymérisation et neutralisation partielle.

10. Procédé de préparation de polymères convenant comme agents de lavage et de nettoyage biologiquement dégradables suivant l'une quelconque des revendications 6 à 9, caractérisé en ce que l'on utilise, à titre de composant monomérique a), l'acide maléique, l'acide itaconique et l'acide fumarique, ou leurs sels, à titre de composant monomérique b), l'acide acrylique ou 1' acide méthacrylique ou leurs sels et, à titre de composant monomérique c), l'acétate de vinyle, le propionate de vinyle, l'éther monovinylique de l'éthylèneglycol et/ou l'éther méthylvinylique.

11. Procédé de fabrication de polymères biologiquement dégradables, convenant comme agents de lavage et de nettoyage suivant l'une quelconque des revendications 6 à 10, caractérisé en ce que l'on entreprend l'hydrolyse ou la saponification avec des hydroxydes de métaux alcalins en présence de peroxyde d'hydrogène ou avec de l'anhydride sulfureux, de préférence, après la polymérisation.

12. Utilisation des polymères suivant l'une quelconque des revendications 1 à 11, à titre d'additifs ou d'agents détergents conjoints dans des agents ou produits de lavage.

13. Utilisation des polymères suivant l'une quelconque des revendications 1 à 11, à titre d'additifs pour des agents de nettoyage.

14. Utilisation des polymères suivant l'une quelconque des revendications 1 à 11, au cours du prétraitement du coton, plus particulièrement lors de l'ébullition, du lessivage et du blanchiment.

15. Utilisation des polymères suivant l'une quelconque des revendications 1 à 11, à titre de stabilisateurs lors du blanchiment aux peroxydes.

16. Utilisation des polymères suivant l'une quelconque des revendications 1 à 11, à titre d'additifs ou adjuvants de lavage au cours du processus de teinture.

17. Utilisation des polymères suivant l'une quelconque des revendications 1 à 11, à titre d'adjuvants lors de l'impression de matières textiles.

18. Utilisation des polymères suivant l'une quelconque des revendications 1 à 11, à titre d'additifs pour l'ensimage de fibres textiles.

19. Utilisation des polymères suivant l'une quelconque des revendications 1 à 11, à titre d'adjuvants au cours de la fabrication du cuir.

20. Utilisation des polymères suivant l'une quelconque des revendications 1 à 11, à titre d'adjuvants au cours de la fabrication du cuir lors de la trempe ou reverdissage, du pelanage, particulièrement au cours de processus de lavage après le pelanage et, plus spécialement, au cours du déchaulage et au cours du déchaulage au CO₂.

21. Utilisation des polymères suivant l'une quelconque des revendications 1 à 11, à titre d'additifs au cours du prétannage, du tannage et du retannage.

22. Utilisation des polymères suivant l'une quelconque des revendications 1 à 11, pour l'inhibition de la dureté de l'eau et à titre d'inhibiteurs de dépôts.

23. Utilisation des polymères suivant l'une quelconque des revendications 1 à 11, à titre d'agents dispersifs.
